# EUROPEAN PATENT APPLICATION

(11) **EP 4 799 876 A1**
(43) Date of publication of application: **02.09.2026**
(21) Application number: 26157250.7
(22) Date of filing: 09.02.2026
(51) Int. Cl.: B60R 25/24

(54) **VEHICLE**

(30) Priority: 28.02.2025 JP 2025031974
(71) Applicant: Toyota Jidosha Kabushiki Kaisha, Toyota-shi, Aichi-ken 471-8571 (JP)
(72) Inventor: KOBAYASHI, Junya, Toyota-shi, 471-8571 (JP); HOMMA, Hiroki, Toyota-shi, 471-8571 (JP); MATSUMOTO, Satoshi, Toyota-shi, 471-8571 (JP); MURASE, Junji, Ohguchi-cho, 480-0195 (JP); MORI, Yuki, Ohguchi-cho, 480-0195 (JP); HASEGAWA, Yosuke, Ohguchi-cho, 480-0195 (JP)
(74) Representative: J A Kemp LLP

(57) **Abstract**

An owner key and a shareable key, which are digital keys of a vehicle, are registered in the vehicle. When determining that a termination process has been executed with the vehicle in a stopped state at a termination location, the vehicle starts a deletion process for a shareable key registered in the vehicle when a digital key other than the registered shareable key is authenticated. When determining that the termination process has not been executed with the vehicle in a stopped state at the termination location, the vehicle does not delete the registered shareable key for which deletion is deferred even if the digital key other than the registered shareable key is authenticated for the vehicle.

## Description

### CROSS-REFERENCE TO RELATED APPLICATIONS

This application is based upon and claims the benefit of priority from Japanese Patent Application No. 2025-031974, filed on February 28, 2025, the entire contents of which are incorporated herein by reference.

### BACKGROUND

### 1. Field

The present disclosure relates to a vehicle.

### 2. Description of Related Art

JP2024-001720A discloses a digital key management system. The management system includes a vehicle, multiple devices, and a management server. In the management system, digital key-related information is stored in both the vehicle and the devices, so that the digital key is registered in the devices. The management server is capable of communicating with both the devices and the vehicle. The management server manages registration of the digital keys. The term "digital key" encompasses an owner key and a shareable key. The vehicle can be unlocked, locked, and started by means of the digital key registered in the device.

In the foregoing management system, a user may register, in association with the same vehicle, multiple shareable keys collectively from the owner key. On the other hand, when the use of the vehicle through a shareable key has been terminated, or when a shareable key has been mistakenly registered, it is desirable that the shareable key be deletable from the owner key. However, if a shareable key can always be deleted, the user possessing that shareable key may become unable to use the vehicle during operation as a result of the deletion.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In a general aspect, a vehicle is configured such that multiple digital keys can be registered. The digital keys include only one owner key registered in the vehicle and one or more shareable keys that can be registered in the vehicle. The vehicle includes an execution device, a storage device configured to store information relating to the digital keys registered in the vehicle, and a communication device configured to communicate with a management server configured to manage registration and deletion of the digital keys and with devices configured to store information relating to the digital keys. The one or more shareable keys are configured such that a validity period of use of the vehicle can be set for each shareable key. The execution device is configured to set a first grace period during which deletion of a registered shareable key that is registered in the vehicle and for which the validity period is set is deferred when a deletion request is made for the registered shareable key based on expiration of the validity period of the registered shareable key. The execution device is configured to determine, based on location information of the vehicle, whether a termination process of permitting a start of a deletion process for the registered shareable key has been executed with the vehicle in a stopped state at a termination location, the termination location being a prescribed location at which use of the vehicle is to be terminated. The execution device is configured to start the deletion process for the registered shareable key when determining that the termination process has been executed with the vehicle in a stopped state at the termination location. The execution device is configured to when determining that the termination process has not been executed with the vehicle in a stopped state at the termination location, not delete the registered shareable key for which deletion is deferred even if a digital key other than the registered shareable key is authenticated for the vehicle.

Other features and aspects will be apparent from the following detailed description, the drawings, and the claims.

### BRIEF DESCRIPTION OF THE DRAWINGS

Fig. 1 is a schematic diagram showing a digital key management system according to an embodiment.
Fig. 2 is a schematic diagram showing a configuration of a vehicle shown in Fig. 1.
Fig. 3 is a schematic diagram showing a configuration of the owner device shown in Fig. 1.
Fig. 4 is a schematic diagram showing a configuration of an owner device that is a virtual machine implemented on the server shown in Fig. 1.
Fig. 5 is a schematic diagram showing a configuration of the friend device shown in Fig. 1.
Fig. 6 is a schematic diagram showing a configuration of the guest device shown in Fig. 1.
Fig. 7 is a schematic diagram showing a configuration of the management server shown in Fig. 1.
Fig. 8 is a schematic diagram showing owner key information stored in the owner device shown in Fig. 3.
Fig. 9 is a schematic diagram showing shareable key information stored in each of the shareable devices shown in Figs. 5 and 6.
Fig. 10 is a schematic diagram showing data in a database of the management server shown in Fig. 7.
Fig. 11 is a sequence diagram of an owner key registration process executed by the management system shown in Fig. 1 when the owner device is a portable information terminal.
Fig. 12 is a sequence diagram of an owner key registration process executed by the management system shown in Fig. 1 when the owner device is a virtual machine.
Fig. 13 is a sequence diagram of a friend key registration process executed by the management system shown in Fig. 1.
Fig. 14 is a sequence diagram of a guest key registration process executed by the management system shown in Fig. 1.
Fig. 15 is a flowchart showing a process when the vehicle of Fig. 1 selects a deletion process for a shareable key.
Fig. 16 is a sequence diagram showing a process when a first deletion request is made in the management system shown in Fig. 1.
Fig. 17 is a sequence diagram showing a process when a second deletion request is made in the management system shown in Fig. 1.
Fig. 18 is a sequence diagram showing a process when a third deletion request is made in the management system shown in Fig. 1.
Fig. 19 is a schematic diagram showing the positional relationship between a return location and return-permissible locations for the vehicles in Fig. 1.
Fig. 20 is an enlarged schematic diagram of the area around the return location shown in Fig. 19.
Fig. 21 is a flowchart showing details of the first deletion process shown in Fig. 15.
Fig. 22 is a flowchart showing details of the second deletion process shown in Fig. 15.
Fig. 23 is a flowchart showing details of the third deletion process shown in Fig. 15.
Fig. 24 is a sequence diagram illustrating a process, in a deletion process for a first shareable key executed by the management system of Fig. 1, from the start of the process until immediately prior to authentication of a second shareable key.
Fig. 25 is a sequence diagram illustrating a process, in the deletion process for the first shareable key executed by the management system of Fig. 1, from the authentication of the second shareable key until immediately before transmission of a key deletion request.
Fig. 26 is a sequence diagram illustrating a process, in the deletion process for the first shareable key executed by the management system of Fig. 1, from the transmission of the key deletion request to the end of the process.
Fig. 27 is a flowchart showing a process when the vehicle executes an emergency deletion process in the restriction phase-out period shown in Fig. 22.
Fig. 28 is a schematic diagram showing movement of a vehicle from which a shareable key is to be deleted in the emergency deletion process shown in Fig. 27.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

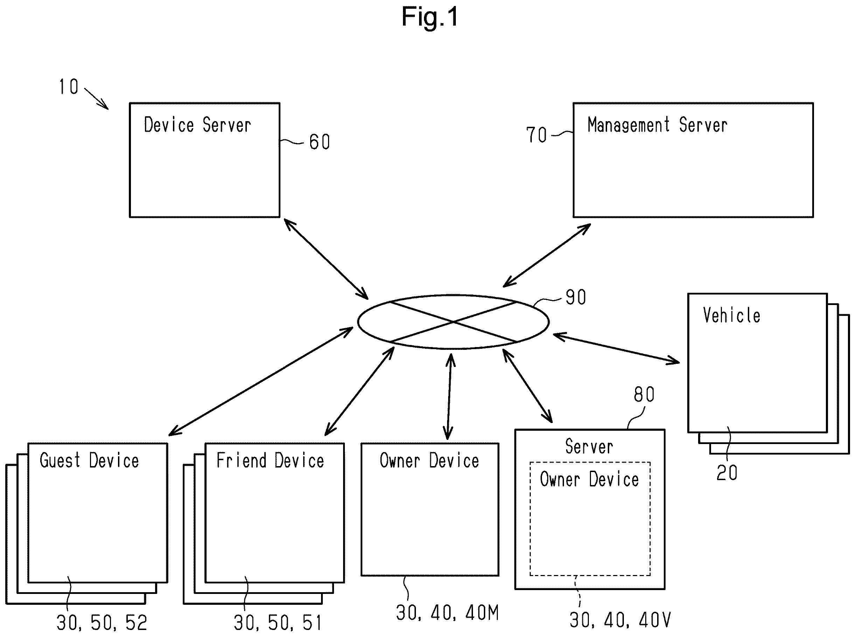

A digital key management system 10 according to an embodiment will now be described with reference to Figs. 1 to 28.

Standards for digital keys have been established by the Car Connectivity Consortium (CCC). The digital key functionality in the present embodiment conforms to the standards established by the CCC.

### Overview of Management System 10

As shown in Fig. 1, the management system 10 includes multiple vehicles 20, multiple devices 30, a device server 60, a management server 70, and a server 80. The vehicles 20, the devices 30, the device server 60, the management server 70, and the server 80 are capable of communicating with each other via a network 90. The network 90 is a wireless communication network.

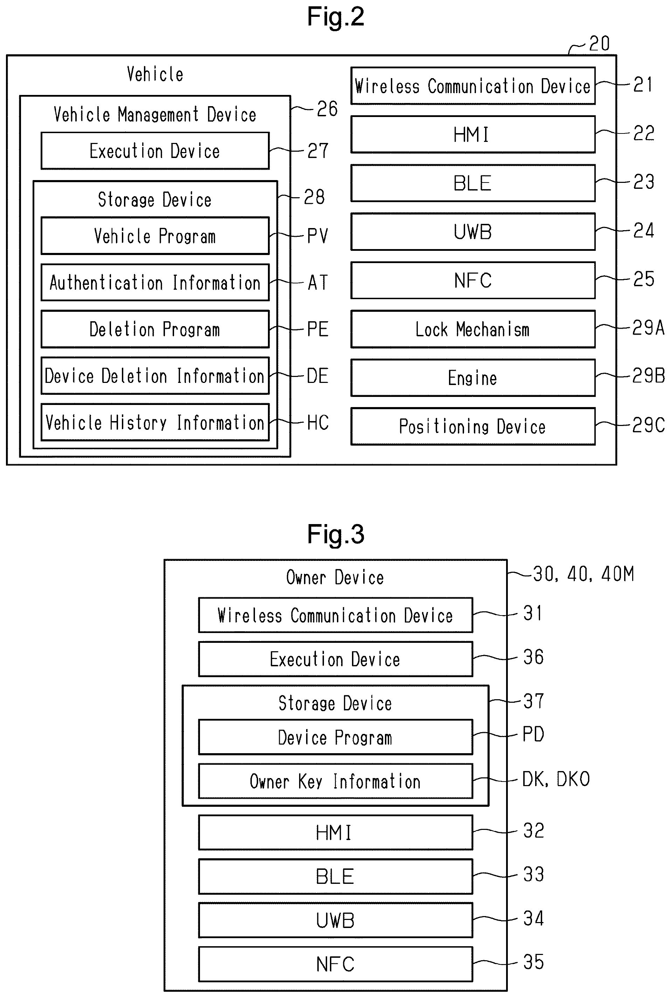

As shown in Fig. 2, each vehicle 20 includes a wireless communication device 21, a human machine interface (HMI) 22, a Bluetooth Low Energy (BLE) module 23, an Ultra Wide Band (UWB) module 24, a Near Field Communication (NFC) module 25, and a vehicle management device 26.

The wireless communication device 21 performs wireless communication with the management server 70 via the network 90. The HMI 22 includes an input device, which undergoes input operations performed by the user of the vehicle 20, and an output device, which presents information to the user. The output device is, for example, a monitor and a speaker.

The BLE module 23 performs short-range wireless communication with the devices 30 via BLE communication. The UWB module 24 performs short-range wireless communication with the devices 30 via UWB communication. The UWB module 24 measures the distance between the devices 30 and the vehicle 20. The NFC module 25 performs short-range wireless communication with the devices 30 via NFC communication. The BLE module 23, the UWB module 24, and the NFC module 25 are all proximity communication devices. The vehicle management device 26 is mounted on the vehicle 20. The vehicle management device 26 manages the digital keys of the vehicle 20. The vehicle management device 26 is, for example, a digital key ECU. The vehicle management device 26 includes an execution device 27 and a storage device 28. The execution device 27 is processing circuitry including one or more processors that execute various processes according to computer programs (software). The storage device 28 stores a vehicle program PV, authentication information AT, a deletion program PE, device deletion information DE, and vehicle history information HC.

The vehicle program PV causes the execution device 27 to store and delete the authentication information AT. The authentication information AT is information relating to digital keys. Specifically, the authentication information AT is information for authenticating a digital key so that the vehicle 20 can be controlled using the digital key when the digital key is used. The authentication information AT is provided for each digital key to be authenticated. The execution device 27 includes a CPU. The execution device 27 executes the vehicle program PV to execute processes related to storage and deletion of the authentication information AT.

The deletion program PE causes the execution device 27 to manage start of deletion of a digital key. The deletion program PE causes the execution device 27 to determine whether the authentication information AT stored in the vehicle 20 can be deleted based on the device deletion information DE and the vehicle history information HC. The device deletion information DE is information relating to conditions for deletion of the digital key. The device deletion information DE includes, for example, a deletion flag EF indicating whether deletion of the authentication information AT related to each digital key is permitted. The vehicle history information HC is information relating to a usage state of the vehicle 20 while the vehicle 20 is used by means of a digital key. The vehicle history information HC includes, for example, information relating to location information GL of the vehicle 20 at each point in time.

The vehicle 20 includes a lock mechanism 29A, an engine 29B, and a positioning device 29C. The lock mechanism 29A locks and unlocks the doors of the vehicle 20. The engine 29B is an internal combustion engine. The vehicle 20 may include a hybrid mechanism instead of the engine 29B. The positioning device 29C acquires the location information GL of the vehicle 20 through wireless communication with artificial satellites. The positioning device 29C acquires the location information GL of the vehicle 20 by using, for example, a Global Positioning System (GPS).

As shown in Fig. 1, the multiple devices 30 include an owner device 40 and shareable devices 50. The shareable devices 50 include friend devices 51 and guest devices 52. The devices 30 include not only portable information terminals such as smartphones but also virtual machines implemented on the server 80.

The owner device 40 may be a portable device 40M or a virtual device 40V. The portable device 40M is an owner device 40 that is a portable information terminal. The virtual device 40V is an owner device 40 that is a virtual machine.

As shown in Fig. 3, the portable device 40M includes a wireless communication device 31, an HMI 32, a BLE module 33, a UWB module 34, an NFC module 35, an execution device 36, and a storage device 37. The wireless communication device 31 performs wireless communication via the network 90. The HMI 32 includes an input device, which undergoes input operations performed by the user of the portable device 40M, and an output device, which presents information to the user. The output device is, for example, a monitor and a speaker.

The BLE module 33 performs short-range wireless communication with the vehicle 20 via BLE communication. The UWB module 34 performs short-range wireless communication with the vehicles 20 via UWB communication. The NFC module 35 performs short-range wireless communication with the vehicles 20 via NFC communication. The BLE module 33, the UWB module 34, and the NFC module 35 are all proximity communication devices.

The storage device 37 stores a device program PD and key information DK. The device program PD causes the execution device 36 to store and delete the key information DK. The key information DK is information indicating a digital key.

The device program PD includes, for example, a device application and a digital key framework. The device application is an application for storing and deleting the key information DK. The digital key framework is a program that provides functions of pairing of the device 30 and sharing of digital keys by using an API prepared in the OS. The execution device 36 executes the device program PD to execute processes related to storage and deletion of the key information DK. The execution device 36 is processing circuitry including one or more processors that execute various processes according to computer programs (software).

The key information DK is information indicating a digital key. The owner device 40 stores owner key information DKO indicating the owner key KO as the key information DK. The owner key KO is a digital key, and only one owner key KO is allowed to be registered for each vehicle 20. Therefore, there is only one owner key KO for one vehicle 20. The owner device 40 is a device 30 belonging to the owner of a vehicle 20.

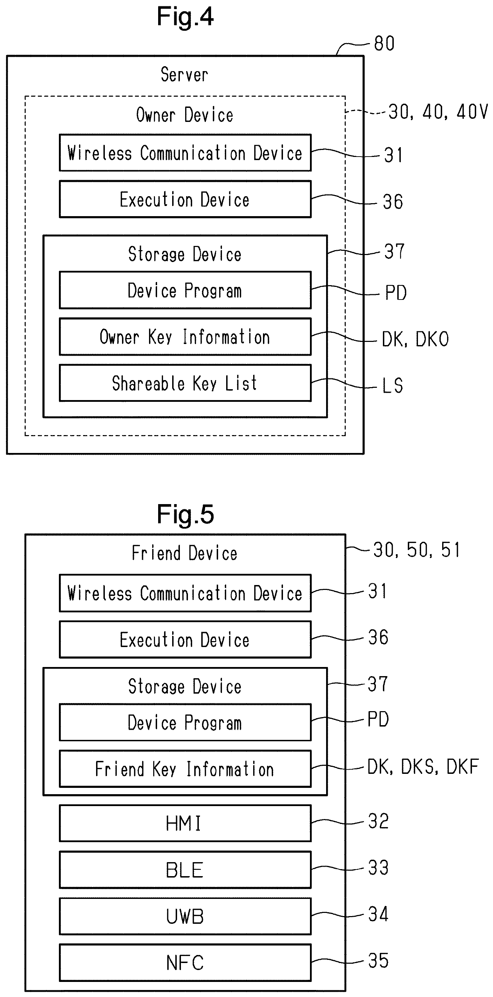

As shown in Fig. 4, the virtual device 40V includes a wireless communication device 31, an execution device 36, and a storage device 37. The wireless communication device 31, the execution device 36, and the storage device 37 included in the virtual device 40V may be virtual components that use designated regions of the wireless communication device 31, the execution device 36, and the storage device 37 of the server 80. The storage device 37 stores a device program PD, key information DK, and a shareable key list LS. The execution device 36 executes the device program PD to execute processes related to storage and deletion of the key information DK. The execution device 36 is processing circuitry including one or more processors that execute various processes according to computer programs (software). The virtual device 40V also stores owner key information DKO indicating the owner key KO as the key information DK, similarly to the portable device 40M. The shareable key list LS will be described later.

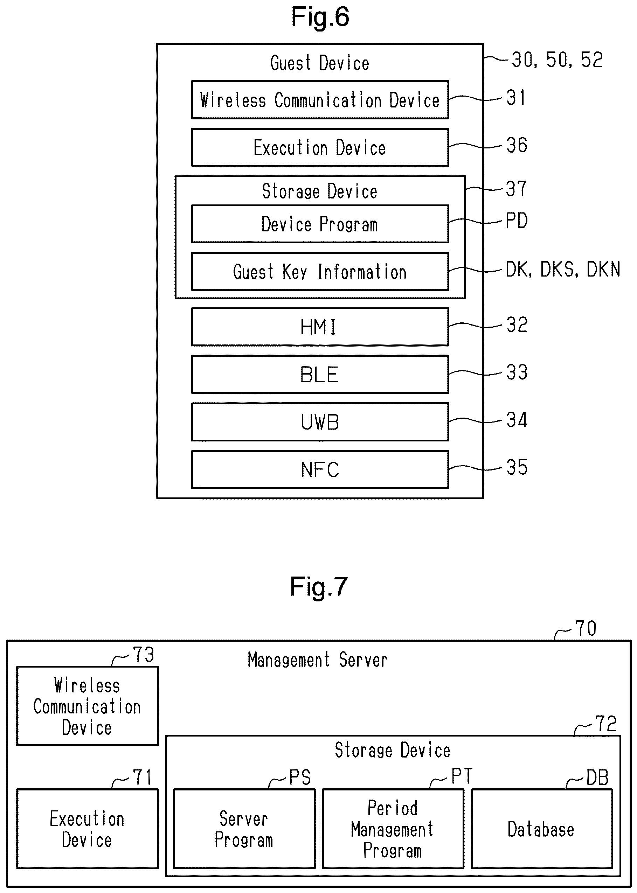

As shown in Figs. 5 and 6, the shareable devices 50 each store shareable key information DKS indicating a shareable key KS as the key information DK. The shareable devices 50 are devices 30 other than the owner devices 40. The shareable keys KS are digital keys, and multiple shareable keys KS are allowed to be registered for each vehicle 20. That is, multiple shareable keys KS may be associated with a single vehicle 20, thereby allowing multiple shareable keys KS to be used with the same vehicle 20.

The friend device 51, which is included in the shareable devices 50, is, for example, a portable information terminal such as a smartphone. As shown in Fig. 5, the friend device 51 includes, like the portable device 40M, a wireless communication device 31, an HMI 32, a BLE module 33, a UWB module 34, an NFC module 35, an execution device 36, which is processing circuitry, and a storage device 37. The storage device 37 stores a device program PD, key information DK, and shareable key information DKS. In the friend device 51, the key information DK is friend key information DKF indicating a friend key KF.

The guest device 52, which is included in the shareable devices 50, is, for example, a portable information terminal such as a smartphone. As shown in Fig. 6, the guest device 52 includes, like the portable device 40M, a wireless communication device 31, an HMI 32, a BLE module 33, a UWB module 34, an NFC module 35, an execution device 36, which is processing circuitry, and a storage device 37. The storage device 37 stores a device program PD, key information DK, and shareable key information DKS. In the guest device 52, the key information DK is guest key information DKN indicating a guest key KN.

The types of the shareable keys KS include a friend key KF and a guest key KN. The friend key KF is a shareable key KS that has been registered based on a direct registration request D31 from the owner device 40, as described later. The guest key KN is a shareable key KS that has been registered based on a registration request D41 from the friend device 51, as described later. The guest key KN is a shareable key KS that has been registered based on a registration request D41 from another device 30, rather than a direct registration request D31 from the owner device 40. In other words, the guest key KN refers to a shareable key KS that is not a friend key KF among the shareable keys KS.

The management server 70 manages digital keys. As shown in Fig. 7, the management server 70 includes an execution device 71, a storage device 72, and a wireless communication device 73. The execution device 71 is processing circuitry including one or more processors that execute various processes according to computer programs (software). The wireless communication device 73 wirelessly communicates with the devices 30, the vehicles 20, and the server 80. The storage device 72 stores a server program PS, a period management program PT, and a database DB. The server program PS causes the execution device 71 to register digital keys in the database DB and delete digital keys from the database DB. The period management program PT causes the execution device 71 to manage a validity period VP of the shareable key KS, which will be described later.

The device server 60 shown in Fig. 1 relays communication between the devices 30, which are portable information terminals, and the management server 70. Fig. 1 illustrates only one device server 60. However, a separate device server 60 may be provided for each type of device 30. That is, the device server 60 used for communication with a first type of device 30 may differ from the device server 60 used for communication with a second type of device 30. For example, the type may refer to the model of the device 30, and a separate device server 60 may be provided for each model of the device 30. In another example, the type may refer to the communication line used by the device 30, and a separate device server 60 may be provided for each type of communication line.

Each device server 60 relays communication between the corresponding device 30 and the management server 70. The devices 30 of different types are each capable of communicating with the management server 70 via the corresponding device server 60.

A state in which the digital key is registered refers to a state in which the digital key is available for use. In a state in which the digital key is registered, the vehicle 20 stores the authentication information AT, and the devices 30 store the key information DK. When the vehicle management device 26 authenticates the digital key, the vehicle management device 26 enables control of the vehicle 20 using the authenticated digital key. For example, upon authentication of the digital key, the vehicle management device 26 controls the lock mechanism 29A to enable unlocking of the vehicle 20. In another example, upon authentication of the digital key, the vehicle management device 26 controls the engine 29B to enable starting of the vehicle 20.

### Configuration of Information Related to Digital Keys

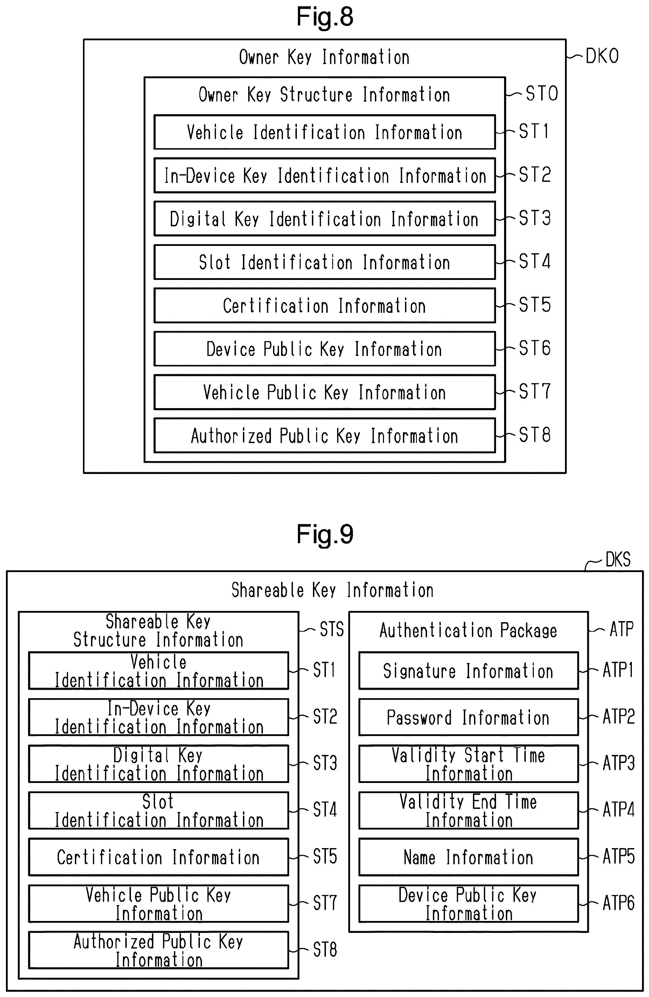

As shown in Fig. 8, the owner key information DKO includes owner key structure information STO. The owner key structure information STO includes vehicle identification information ST1, in-device key identification information ST2, digital key identification information ST3, and slot identification information ST4. The owner key structure information STO further includes certificate information ST5, device public key information ST6, vehicle public key information ST7, and authorized public key information ST8.

The vehicle identification information ST1 is information that identifies the vehicle 20 for which digital keys are set. For example, the vehicle identification information ST1 may be the ID of the vehicle 20.

The in-device key identification information ST2 is used for management of digital keys in the device 30. The in-device key identification information ST2 is information that identifies the digital keys in the application of the device 30.

The digital key identification information ST3 is used for management of digital keys in the management server 70. The slot identification information ST4 is information that identifies digital keys locally within the devices 30.

The certificate information ST5 indicates a certificate that authenticates digital keys. The device public key information ST6 indicates a device public key PKD, which is a public key of the device 30. The device public key PKD in the owner key information DKO indicates the public key of the owner device 40. The vehicle public key information ST7 indicates a vehicle public key PKV, which is a public key of the vehicle 20. The authorized public key information ST8 indicates the vehicle public key PKV that has been permitted.

As shown in Fig. 9, the shareable key information DKS includes shareable key structure information STS and an authentication package ATP. The shareable key structure information STS includes vehicle identification information ST1, in-device key identification information ST2, digital key identification information ST3, and slot identification information ST4. The shareable key structure information STS includes certificate information ST5, vehicle public key information ST7, and authorized public key information ST8. The shareable key structure information STS is information obtained by removing the device public key information ST6 from the owner key structure information STO.

The authentication package ATP includes signature information ATP1, password information ATP2, validity start time information ATP3, validity end time information ATP4, name information ATP5, and device public key information ATP6.

The signature information ATP1 indicates that the shareable device 50 is an authorized entity for receiving the digital key. For example, in the case of the friend device 51, the signature information ATP1 indicates a signature by the owner device 40. The signature information ATP1 of the friend device 51 indicates that the owner device 40 has signed the device public key PKD of the friend device 51 indicated by the device public key information ATP6. For example, in the case of the guest device 52, the signature information ATP1 indicates a signature by the friend device 51. The friend signature information indicates that the friend device 51 has signed the device public key PKD of the guest device 52 indicated by the device public key information ATP6.

The password information ATP2 indicates a pairing password PAS used to establish a secure channel during the pairing between the vehicle 20 and the owner device 40. The validity start time information ATP3 indicates the earliest date and time at which the shareable key KS becomes valid for use. The validity end time information ATP4 indicates the latest date and time until which the shareable key KS remains valid for use. The name information ATP5 indicates the name of the shareable key KS for identifying the shareable key KS. For example, the name information ATP5 is set to an identifiable name for each of the shareable devices 50, for example, by an operation from the owner device 40.

The database DB shown in Fig. 7 includes information in which, for each of the digital keys, the corresponding vehicle 20 is associated with the registered devices 30. The data DA contained in the database DB is organized on a per-vehicle basis. In a state in which digital keys are registered, the management server 70 stores, as the data DA, information indicating devices 30 storing key information DK, which indicates the digital keys. The management server 70 manages the digital keys by storing information relating to the digital keys as the data DA in the database DB.

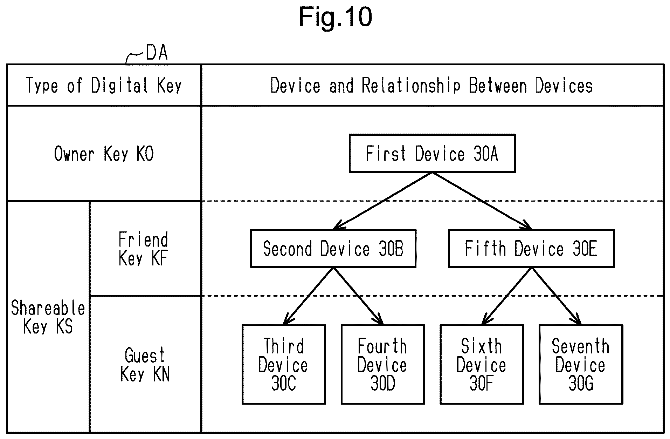

As shown in Fig. 10, the data DA of one vehicle 20 includes information relating to the types of digital keys registered in the vehicle 20, the registered devices 30, and the relationship between the registered devices 30. The digital keys are categorized into multiple hierarchical levels according to their respective types. From highest to lowest in the hierarchy, the digital keys are ordered as the owner key KO, the friend key KF, and the guest key KN. Digital keys at higher hierarchical levels are assigned greater authority.

Authority includes, for example, the number of shareable keys KS that may be requested for registration, and the scope of control over the vehicle 20 enabled through authentication of the digital key. Digital keys at higher hierarchical levels are permitted to request registration of a greater number of shareable keys KS. Specifically, for example, the number of friend keys KF that an owner device 40 is permitted to request for registration is greater than the number of guest keys KN that a friend device 51 is permitted to request for registration.

Further, as the hierarchical level of a digital key increases, the scope of control permitted over the vehicle 20 also increases. The control scope over the vehicle 20 refers to the set of controllable functions, such as start control of the engine 29B of the vehicle 20, power-on control of the vehicle 20, and door unlocking and locking control of the lock mechanism 29A of the vehicle 20. For example, when the control scope of the vehicle 20 includes all three of the above functions, the control scope is broader than when it includes only door unlocking and locking control of the lock mechanism 29A of the vehicle 20. Specifically, the control scope of the vehicle 20 permitted by the friend key KF includes all three functions described above, whereas the control scope permitted by the guest key KN is limited to only the unlocking and locking control of the lock mechanism 29A of the vehicle 20.

A state will now be described in which digital keys are registered for seven devices 30 for one vehicle 20. The seven devices 30 are first through seventh devices 30A to 30G. The digital keys respectively registered in the first device 30A to the seventh device 30G are a first key through a seventh key.

The device 30 in which the owner key KO is registered as a digital key is the first device 30A. In other words, the first device 30A is the owner device 40. Accordingly, the first digital key is the owner key KO.

The devices 30 to which the shareable keys KS are registered as digital keys are the second device 30B, the third device 30C, the fourth device 30D, the fifth device 30E, the sixth device 30F, and the seventh device 30G. In other words, the second device 30B, the third device 30C, the fourth device 30D, the fifth device 30E, the sixth device 30F, and the seventh device 30G are the shareable devices 50. In other words, the second key through the seventh key are all shareable keys KS.

Specifically, the devices 30 to which the friend key KF is registered as the shareable key KS are the second device 30B and the fifth device 30E. In other words, the second device 30B and the fifth device 30E are the friend devices 51. The devices 30 to which the guest key KN is registered as the shareable key KS are the third device 30C, the fourth device 30D, the sixth device 30F, and the seventh device 30G. In other words, the third device 30C, the fourth device 30D, the sixth device 30F, and the seventh device 30G are the guest devices 52.

The relationship between the registered devices 30 included in the data DA will now be described. The relationship between the second device 30B and the first device 30A is such that the friend key KF has been registered in the second device 30B in response to a registration request from the first device 30A. In other words, the second digital key is registered based on the first digital key. The relationship between the fifth device 30E and the first device 30A is such that the friend key KF has been registered in the fifth device 30E in response to a registration request from the first device 30A. In other words, the fifth digital key is registered based on the first digital key.

The relationship between the third device 30C and the second device 30B is such that the guest key KN has been registered in the third device 30C in response to a registration request from the second device 30B. In other words, the third digital key is registered based on the second digital key. In the data DA, the relationship between the fourth device 30D and the second device 30B is such that the guest key KN has been registered in the fourth device 30D based on a registration request from the second device 30B. In other words, the fourth digital key is registered based on the second digital key.

The relationship between the sixth device 30F and the fifth device 30E is such that the guest key KN has been registered in the sixth device 30F in response to a registration request from the fifth device 30E. In other words, the sixth digital key is registered based on the fifth digital key. The relationship between the seventh device 30G and the fifth device 30E is such that the guest key KN has been registered in the seventh device 30G in response to a registration request from the fifth device 30E. In other words, the seventh digital key is registered based on the fifth digital key.

As described above, the data DA includes information relating to the devices 30 to which the digital keys have been registered. In the data DA, each registered device 30 is associated with information indicating the device 30 that initiated the registration request. The data DA also includes information indicating the digital key on which the registration of each digital key is based.

### Registration of Digital Keys

Next, a series of processes for registering digital keys in the management system 10 will be described. The registration of digital keys includes the registration of the owner key KO, the registration of the friend key KF, and the registration of the guest key KN. First, a series of processes in which the owner key KO is registered in the portable device 40M will be described. Next, a series of processes in which the owner key KO is registered in the virtual device 40V will be described. Subsequently, a series of processes in which the friend key KF is registered in the second device 30B will be described. Finally, a series of processes in which the guest key KN is registered in the third device 30C will be described. In the following description, processes executed by the execution device 27 of the vehicle 20 are described as processes executed by the vehicle 20. The processes executed by the execution device 36 of the portable device 40M and the execution device 36 of the virtual device 40V will be described as processes executed by the portable device 40M and the virtual device 40V. The processes executed by the execution device 36 of the second device 30B and the execution device 36 of the third device 30C will be described as processes executed by the second device 30B and the third device 30C. The processes executed by the execution device 71 of the management server 70 will be described as processes executed by the management server 70.

### Registration of the Owner Key KO in the Portable Device 40M

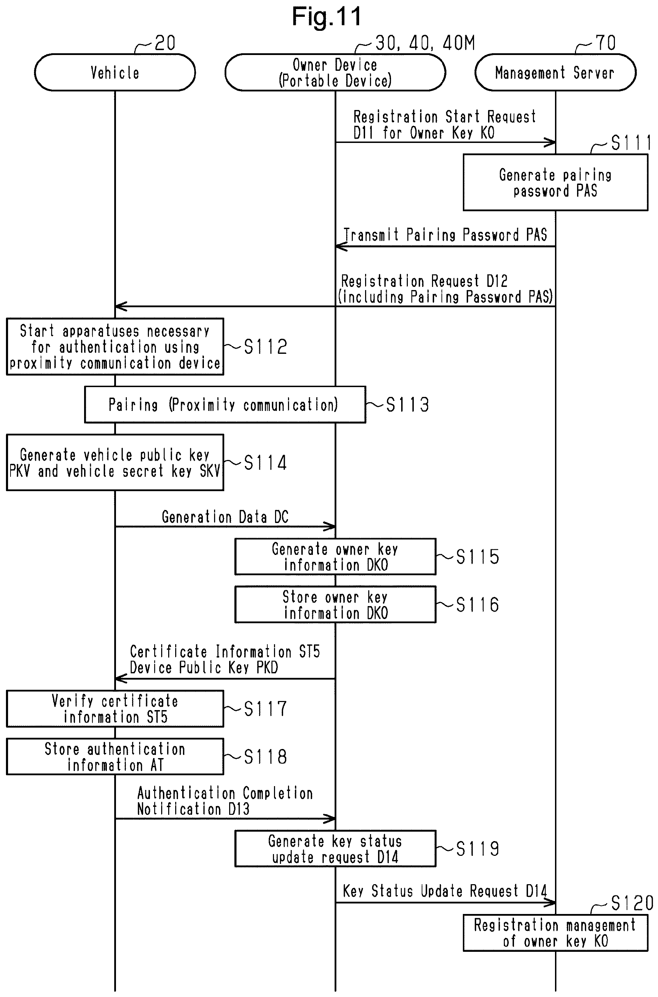

As shown in Fig. 11, the management system 10 executes a series of processes for registering the owner key KO of the vehicle 20 in the portable device 40M. The portable device 40M registers the owner key KO by using proximity communication with the vehicle 20.

In the management system 10, the owner key information DKO, which is the key information DK indicating the owner key KO of the vehicle 20, is stored in the portable device 40M by registering the owner key KO. In the management system 10, the authentication information AT for authenticating the owner key KO is stored in the vehicle 20. When the owner key KO is authenticated by the vehicle 20 and the owner key KO is registered in the management server 70, the vehicle 20 can be controlled using the owner key KO.

When the management server 70 receives a registration start request D11 for the owner key KO from the portable device 40M, the registration process for the owner key KO is started. The registration start request D11 includes information indicating that the owner device 40 in which the owner key KO is registered is the portable device 40M.

In step S111, the management server 70 generates a pairing password PAS used for pairing the portable device 40M with the vehicle 20. Thereafter, the management server 70 transmits information indicating the pairing password PAS to the portable device 40M by using the wireless communication device 73. The management server 70 transmits a registration request D12 including information indicating the pairing password PAS to the vehicle 20 using the wireless communication device 73.

Upon receiving the registration request D12, the vehicle 20 starts apparatuses necessary for authentication of the owner key KO using the proximity communication device in step S112. These apparatuses include, for example, the BLE module 23, the UWB module 24, the NFC module 25, and the digital key ECU included in the vehicle management device 26. By starting the apparatuses, the vehicle 20 is enabled to both wait for and execute the authentication of the digital key using a proximity communication device.

Next, in step S113, when the owner of the vehicle 20 approaches the vehicle 20 with the portable device 40M that has received the pairing password PAS, pairing between the vehicle 20 and the portable device 40M is performed using the proximity communication device. The proximity communication device used for pairing may be at least one of the BLE module 23, the UWB module 24, and the NFC module 25. At this time, when the authentication of the portable device 40M with respect to the vehicle 20 is successful by using the pairing password PAS of the portable device 40M and the vehicle 20, the pairing is completed. When the pairing is complete, a secure channel is established for data communication between the vehicle 20 and the portable device 40M using the proximity communication device. Subsequently, the vehicle 20 advances the process to step S114. From this point onwards, communication between the vehicle 20 and the portable device 40M is conducted via this secure channel until the registration of the owner key KO is completed.

In step S114, the vehicle 20 generates a vehicle public key PKV, which is a public key of the vehicle 20, and a vehicle secret key SKV, which is a secret key of the vehicle 20. Next, the vehicle 20 transmits generation data DC for generating the owner key KO to the portable device 40M via the secure channel. The generation data DC includes the vehicle identification information ST1 and the vehicle public key information ST7 indicating the vehicle public key PKV. Upon receiving the generation data DC, the portable device 40M advances the process to step S115.

In step S115, the portable device 40M generates owner key information DKO indicating the owner key KO. Next, in step S116, the portable device 40M stores the owner key information DKO. Subsequently, the portable device 40M transmits, to the vehicle 20, the certificate information ST5 related to the owner key KO and the device public key information ST6 indicating the device public key PKD.

Upon receiving the certificate information ST5 and the device public key information ST6, the vehicle 20 performs the process of step S117. In step S117, the vehicle 20 verifies the certificate information ST5. When the verification of the certificate information ST5 is completed, the vehicle 20 advances the process to step S118.

In step S118, the vehicle 20 stores the device public key information ST6 indicating the device public key PKD in the storage device 28 as the authentication information AT. Subsequently, the vehicle 20 transmits an authentication completion notification D13 to the portable device 40M, indicating that the storage of the authentication data AT has been completed.

Upon receiving the authentication completion notification D13, the portable device 40M executes the process of step S119. In step S119, the portable device 40M generates a key status update request D14 for the owner key KO. The key status update request D14 is a signal for requesting that the management server 70 update the database DB. The portable device 40M transmits the key status update request D14 for the owner key KO to the management server 70 via the device server 60.

Upon receiving the key status update request D14, the management server 70 executes the process of step S120. In step S120, the management server 70 performs registration management of the owner key KO. Specifically, the management server 70 stores, in the database DB, the fact that the device 30 in which the owner key KO is registered is the portable device 40M as the data DA of the vehicles 20. As a result, the management system 10 terminates the series of processes for registering the owner key KO of the vehicle 20 in the portable device 40M.

### Registration of the Owner Key KO in the Virtual Device 40V

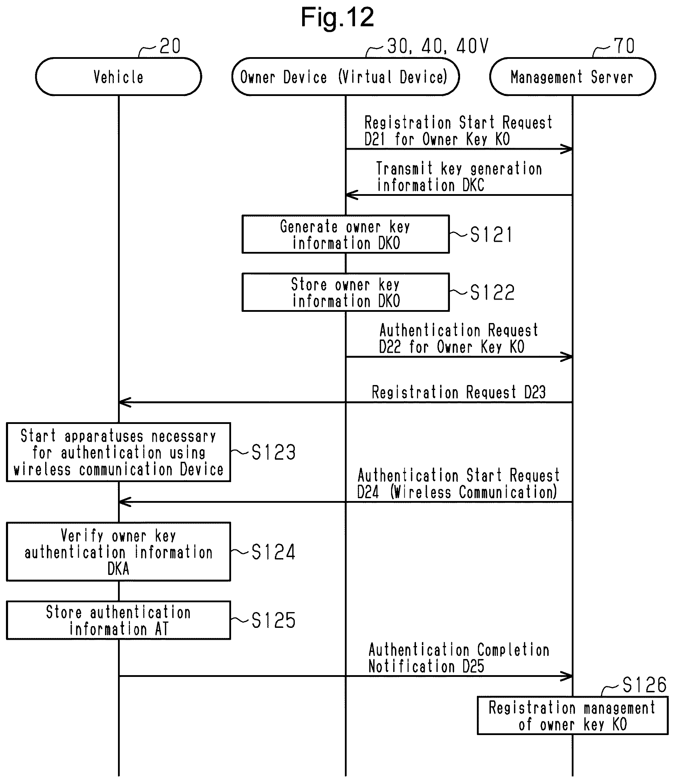

As shown in Fig. 12, the management system 10 executes a series of processes for registering the owner key KO of the vehicle 20 in the virtual device 40V. The virtual device 40V registers the owner key KO by using wireless communication without performing proximity communication with the vehicle 20.

In the management system 10, the owner key information DKO, which is the key information DK indicating the owner key KO of the vehicle 20, is stored in the virtual devices 40V by registering the owner key KO. In the management system 10, the authentication information AT for authenticating the owner key KO is stored in the vehicle 20. When the owner key KO is authenticated by the vehicle 20 and the owner key KO is registered in the management server 70, the vehicle 20 can be controlled using the owner key KO.

When the management server 70 receives a registration start request D21 for the owner key KO from the virtual device 40V, the registration process for the owner key KO is started. Upon receiving the registration start request D21, the management server 70 transmits key generation information DKC for the purpose of generating the owner key KO to the virtual device 40V. The registration start request D21 includes information indicating that the owner device 40, in which the owner key KO is registered, is the virtual device 40V. The key generation information DKC includes information corresponding to the vehicle identification information ST1 and the vehicle public key information ST7 indicating the vehicle public key PKV. Upon receiving the key generation information DKC, the virtual device 40V advances the process to step S121.

In step S121, the virtual device 40V generates owner key information DKO indicating the owner key KO. Next, in step S122, the virtual device 40V stores the owner key information DKO. Subsequently, the virtual device 40V transmits an authentication request D22 for the owner key KO to the management server 70. The authentication request D22 includes the owner key authentication information DKA, and the owner key authentication information DKA includes information corresponding to the certificate information ST5 related to the owner key KO and the device public key information ST6 indicating the device public key PKD.

Subsequently, upon receiving the authentication request D22, the management server 70 uses the wireless communication device 73 to transmit a registration request D23 to the vehicle 20. The registration request D23 includes information indicating that the owner device 40 in which the owner key KO is registered is the virtual device 40V. On the other hand, the registration request D12 described above does not include information indicating that the owner device 40, in which the owner key KO is registered, is the virtual device 40V.

Upon receiving the registration request D23, the vehicle 20 starts apparatuses necessary for authentication of the owner key KO using the wireless communication device 21 in step S123. These apparatuses include, for example, the wireless communication device 21 and the digital key ECU included in the vehicle management device 26. By starting these apparatuses, the vehicle 20 is enabled to both wait for and execute the authentication of the digital key using the wireless communication device 21.

Next, the management server 70, which has transmitted the registration request D23, uses the wireless communication device 73 to transmit, to the vehicle 20, an authentication start request D24 for the owner key KO including the owner key authentication information DKA. Upon receiving the authentication start request D24, the vehicle 20 advances the process to step S124 to start authentication of the owner key KO.

In step S124, the vehicle 20 verifies the owner key authentication information DKA. When the verification of the information corresponding to the certificate information ST5 included in the owner key authentication information DKA is completed, the vehicle 20 advances the process to step S125.

In step S125, the vehicle 20 stores information corresponding to the device public key information ST6 indicating the device public key PKD as the authentication information AT. Subsequently, the vehicle 20 uses the wireless communication device 21 to transmit an authentication completion notification D25 to the management server 70. The authentication completion notification D25 indicates that the storage of authentication information AT has been completed.

Upon receiving the authentication completion notification D25, the management server 70 executes the process of step S126. In step S126, the management server 70 performs registration management of the owner key KO. Specifically, the management server 70 stores, in the database DB, the fact that the device 30 in which the owner key KO is registered is the virtual device 40V as the data DA of the vehicles 20. As a result, the management system 10 terminates the series of processes for registering the owner key KO in the virtual device 40V.

### Registration of the Friend Key KF

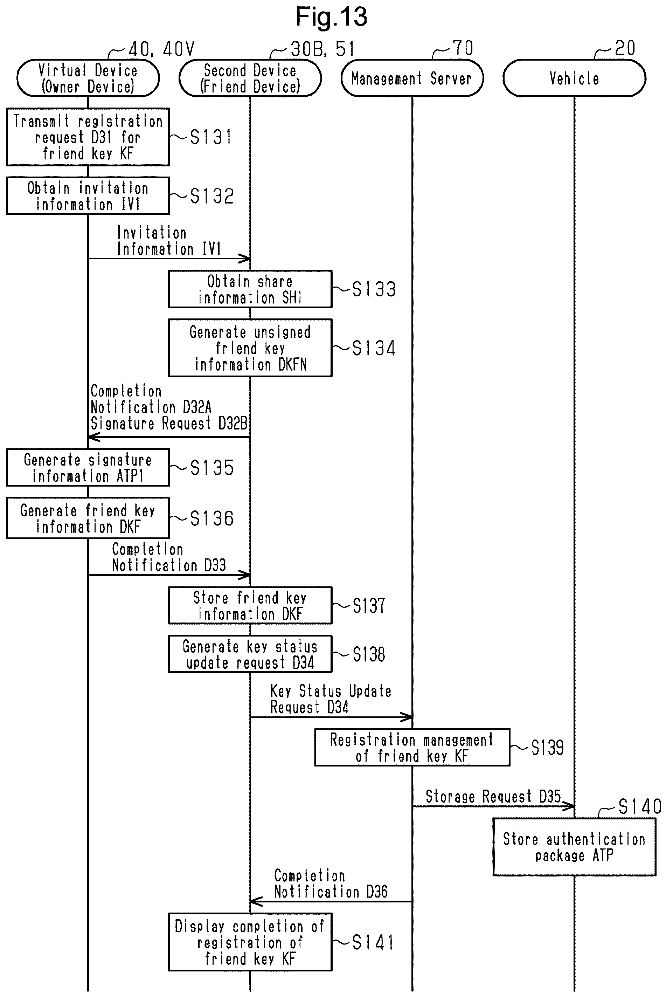

As shown in Fig. 13, the management system 10 executes a series of processes in order to register a friend key KF. When the owner device 40 is a virtual device 40V, the registration process for the friend key KF is as follows. Among the devices 30 that do not store the friend key information DKF, the management system 10 designates, as the second device 30B, the device 30 to be designated as the friend device 51 through the series of processes.

When an operation for requesting the registration of the friend key KF is performed in the virtual device 40V, the virtual device 40V first executes the process of step S131. In step S131, the virtual device 40V transmits a registration request D31 for the friend key to the relay server (not shown). Thereafter, the virtual device 40V advances the process to step S132.

In step S132, the virtual device 40V obtains invitation information IV1 for sharing a digital key from the relay server. The invitation information IV1 is, for example, a URL link. The URL link contains share information SH1 necessary to share the digital key. Thereafter, the virtual device 40V transmits the invitation information IV1 to the second device 30B.

Thereafter, upon receiving the invitation information IV1, the second device 30B executes the process of step S133. In step S133, the second device 30B obtains the share information SH1 based on the invitation information IV1. Specifically, the second device 30B downloads the share information SH1 from the source of the URL link.

The share information SH1 includes, for example, the shareable key structure information STS, the password information ATP2, the validity start time information ATP3, the validity end time information ATP4, and the name information ATP5. The validity start time information ATP3, the validity end time information ATP4, and the name information ATP5 are configured by the virtual device 40V. Thereafter, the second device 30B advances the process to step S134.

In step S134, the second device 30B generates unsigned friend key information DKFN by using the share information SH1. The unsigned friend key information DKFN is friend key information DKF that does not have the signature information ATP1. Specifically, the second device 30B generates each piece of information contained in the acquired share information SH1 as individual elements of the unsigned friend key information DKFN. Subsequently, the second device 30B transmits, to the virtual device 40V, a completion notification D32A, indicating that the upload of the generated unsigned friend key information DKFN to the URL link has been completed. The second device 30B also transmits a signature request D32B to the virtual device 40V.

Subsequently, the virtual device 40V receives the completion notification D32A and the signature request D32B from the second device 30B. Upon receiving the completion notification D32A, the virtual device 40V obtains the unsigned guest friend information DKFN. Upon receiving the signature request D32B, the owner device 40 performs the process of step S135.

In step S135, the virtual device 40V generates the signature information ATP1. Specifically, the virtual device 40V generates the signature information ATP1 after verifying that the acquired unsigned friend key information DKFN is correct. Thereafter, the virtual device 40V advances the process to step S136.

In step S136, the virtual device 40V generates friend key information DKF by adding the signature information ATP1 to the unsigned friend key information DKFN. The virtual device 40V uploads the generated friend key information DKF to the URL link, which is the invitation information IV1. The virtual device 40V transmits, to the second device 30B, a completion notification D33 indicating that uploading of the completed friend key information DKF to the URL link has been completed.

Upon acquiring the completion notification D33, the second device 30B executes the process of step S137. In step S137, the second device 30B stores the friend key information DKF by downloading it. As a result, the second device 30B becomes a friend device 51. Thereafter, the second device 30B advances the process to step S138.

In step S138, the second device 30B generates a key status update request D34 for the friend key KF. The second device 30B transmits, to the management server 70, the friend key information DKF and the key status update request D34 for the friend key KF.

Upon receiving the key status update request D34 for the friend key KF, the management server 70 executes the process of step S139. In step S139, the management server 70 performs registration management of the friend key KF.

Specifically, the management server 70 checks that the friend key KF, which is the subject of the key status update request D34, is not listed in a revocation list. The revocation list is a list indicating shareable keys KS, including friend keys KF and guest keys KN, for which deletion requests have already been received. If the friend key KF is listed in the revocation list, the management server 70 transmits a notification to the second device 30B indicating that it cannot respond to the key status update request D34.

On the other hand, when the friend key KF for which the key status update request D34 has been received is not listed in the revocation list, the management server 70 registers, in the database DB, information of a friend key KF for which the key status update request D34 has been received. The management server 70 stores, in the database DB, the friend key information DKF of the friend key KF for which the key status update request D34 has been received. The management server 70 stores, in the database DB, information indicating that the device 30 registered as the friend device 51 is the second device 30B. The management server 70 stores the relationship between the second device 30B and the virtual device 40V by referencing the obtained friend key information DKF. Specifically, the management server 70 stores the fact that the second device 30B is the device 30 having the friend key KF registered in response to the registration request D31 from the virtual device 40V.

Subsequently, the management server 70 transmits, to the vehicle 20, the authentication package ATP, which is part of the friend key information DKF, along with a storage request D35, which requests the storage of the authentication package ATP. That is, the management server 70 transmits the device public key information ST6, which indicates the device public key PKD of the friend device 51, to the vehicle 20. The management server 70 notifies the vehicle 20 that the device public key PKD has been signed by the virtual device 40V.

Thereafter, upon receiving the storage request D35 and the authentication package ATP from the management server 70, the vehicle 20 executes the process of step S140. In step S140, the vehicle 20 stores the received authentication package ATP as the authentication information AT for authenticating the friend key KF.

After completing the registration management, the management server 70 transmits a completion notification D36 of the key status update to the second device 30B.

Upon receiving the completion notification D36 of the key status update, the second device 30B executes the process of step S141. In the process of step S141, the second device 30B presents information indicating the completion of the registration of the friend key KF on the HMI 32. For example, the second device 30B displays an image indicating the completion of the registration of the friend key KF on the HMI 32. As a result, the management system 10 terminates the series of processes for registering the friend key KF.

When the owner device 40 is a portable device 40M, the process in step S135 is different from the case in which the owner device 40 is a virtual device 40V. In a case in which the owner device 40 is a portable device 40M, the portable device 40M generates the signature information ATP1 in the following manner.

The owner device 40 causes the HMI 32 of the portable device 40M to present the unsigned friend key information DKFN that has been obtained, and accepts an operation indicating that the user of the portable device 40M has agreed to the registration of the friend key KF. Upon receiving the operation, the portable device 40M obtains the signature based on the operation. Thereafter, the portable device 40M advances the process to step S136.

### Registration of the Guest Key KN

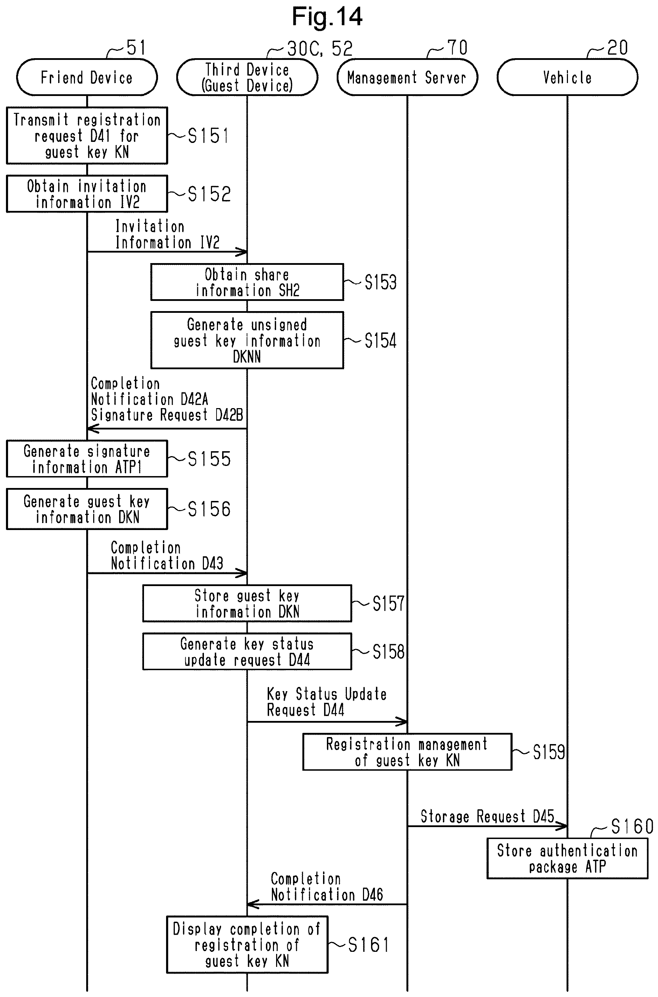

As shown in Fig. 14, the management system 10 executes a series of processes in order to register the guest key KN. Among the devices 30 that do not store the guest key information DKN, the management system 10 designates, as the third device 30C, the device 30 to be designated as the guest device 52 through the series of processes.

When an operation for requesting the registration of the guest key KN is performed in the friend device 51, the friend device 51 first executes the process of step S151. In step S151, the friend device 51 transmits a registration request D41 for the guest key KN to the relay server (not shown). Thereafter, the friend device 51 advances the process to step S152.

In step S152, the friend device 51 obtains invitation information IV2 for sharing a digital key from the relay server. The invitation information IV2 is, for example, a URL link. The URL link contains share information SH2 necessary to share the digital key. Thereafter, the friend device 51 transmits the invitation information IV2 to the third device 30C.

Thereafter, upon receiving the invitation information IV2, the third device 30C executes the process of step S153. In step S153, the third device 30C obtains the share information SH2 based on the invitation information IV2. Specifically, the third device 30C downloads the share information SH2 from the URL link.

The share information SH2 includes, for example, the shareable key structure information STS, the password information ATP2, the validity start time information ATP3, the validity end time information ATP4, and the name information ATP5. The validity start time information ATP3, the validity end time information ATP4, and the name information ATP5 are configured by the friend device 51. Thereafter, the third device 30C advances the process to step S154.

In step S154, the third device 30C generates unsigned guest key information DKNN using the share information SH2. The unsigned guest key information DKNN is guest key information DKN that does not have the signature information ATP1. Specifically, the third device 30C generates each piece of information included in the acquired share information SH2 as each piece of information of the unsigned guest key information DKNN. Subsequently, the third device 30C transmits a completion notification D42A to the friend device 51, indicating that the upload of the generated unsigned guest key information DKNN to the URL link has been completed. The third device 30C also transmits a signature request D42B to the friend device 51.

Subsequently, the friend device 51 receives the completion notification D42A and the signature request D42B from the third device 30C. Upon receiving the completion notification D42A, the friend device 51 obtains the unsigned guest key information DKNN. When the friend device 51 receives the signature request D42B, the friend device 51 is operated to execute the process of step S155.

In step S155, the friend device 51 generates the signature information ATP1. Specifically, the friend device 51 causes the HMI 32 to present the unsigned guest key information DKNN that has been obtained, and accepts an operation indicating that the user of the friend device 51 has agreed to the registration of the guest key KN. Upon receiving the operation, the friend device 51 obtains the signature based on the operation. Thereafter, the friend device 51 advances the process to step S156.

In step S156, the friend device 51 adds the signature information ATP1 to the unsigned guest key information DKNN to generate the guest information DKN. The friend device 51 uploads the generated guest key information DKN to the URL link, which is the invitation information IV2. The friend device 51 transmits, to the third device 30C, a completion notification D43 indicating that uploading of the completed guest key information DKN to the URL link has been completed.

Upon receiving the completion notification D43, the third device 30C executes the process of step S157. In step S157, the third device 30C downloads and stores the guest key information DKN. As a result, the third device 30C becomes the guest device 52. Thereafter, the third device 30C advances the process to step S158.

In step S158, the third device 30C generates a key status update request D44 for the guest key KN. The third device 30C transmits the guest key information DKN and the key status update request D44 for the guest key KN to the management server 70.

Upon receiving the key status update request D44 for the guest key KN, the management server 70 executes the process of step S159. In step S159, the management server 70 performs registration management of the guest key KN.

Specifically, the management server 70 verifies that the guest key KN, which is the subject of the key status update request D44, is not listed in the revocation list. If the guest key KN is listed in the revocation list, the management server 70 transmits a notification to the third device 30C indicating that it cannot respond to the key status update request D44.

On the other hand, in a case in which the guest key KN is not listed in the revocation list, the management server 70 registers the guest key KN, which is the subject of the key status update request D44, to the database DB. The management server 70 stores the guest key information DKN of the guest key KF for which the key status update request D44 has been received in the database DB. The management server 70 stores information indicating that the device 30 registered as the guest device 52 is the third device 30C in the database DB. The management server 70 stores information indicating the relationship between the third device 30C and the friend device 51 by referencing the obtained guest key information DKN. Specifically, the management server 70 stores the fact that the third device 30C is the device 30 having the guest key KN registered in response to the registration request D41 from the friend device 51.

Subsequently, the management server 70 transmits, to the vehicle 20, the authentication package ATP, which is part of the guest key information DKN, along with a storage request D45, which requests the storage of the authentication package ATP. That is, the management server 70 transmits the device public key information ST6, which indicates the device public key PKD of the guest device 52, to the vehicle 20. The management server 70 notifies the vehicle 20 that the device public key PKD has been signed by the friend device 51.

Thereafter, upon receiving the authentication package ATP and the storage request D45, the vehicle 20 executes the process of step S160. In step S160, the vehicle 20 stores the received authentication package ATP. That is, the vehicle 20 stores the authentication package ATP as the authentication information AT for authenticating the guest key KN.

After completing the registration management, the management server 70 transmits a completion notification D46 of the key status update to the third device 30C.

Upon receiving the completion notification D46 of the key status update, the third device 30C executes the process of step S161. In the process of step S161, the third device 30C presents information indicating completion of the registration of the guest key KN on the HMI 32. For example, the third device 30C displays an image indicating the completion of the registration of the guest key KN on the HMI 32. As a result, the management system 10 terminates the series of processes for registering the guest key KN.

### Validity Period VP of the Shareable Key KS

A validity period VP may be set for each shareable key KS. The validity period VP is determined for each shareable key KS based on the validity start time information ATP3 and the validity end time information ATP4 included in the authentication package ATP shown in Fig. 9. The validity period VP is a period from the date and time indicated by the validity start time information ATP3 to the date and time indicated by the validity end time information ATP4. The user having a shareable key KS of the vehicle 20 can use the vehicle 20 with the shareable key KS during the validity period VP.

### Phase-Out Period FO of the Shareable Key KS

A phase-out period FO may be defined for each shareable key KS. The phase-out period FO is a grace period during which deletion of the shareable key KS is deferred until the prescribed condition RC is satisfied. The user having a shareable key KS of the vehicle 20 can continue to use the vehicle 20 with the shareable key KS in the phase-out period FO until the prescribed condition RC is satisfied, so that the shareable key KS is deleted.

The prescribed condition RC is, for example, that a digital key other than the shareable key KS to be deleted is authenticated for the vehicle 20. In this case, when a digital key other than the shareable key KS in the phase-out period FO is authenticated by the vehicle 20 during the phase-out period FO, the vehicle 20 deletes the shareable key KS.

On the other hand, the vehicle 20 may be configured to, even after authenticating a digital key other than the shareable key KS in the phase-out period FO during the phase-out period FO, not delete the shareable key KS in the phase-out period FO. Specifically, when authenticating a digital key other than the shareable key KS during the phase-out period FO, the vehicle 20 can set in advance whether to delete the shareable key KS in the phase-out period FO using the deletion flag EF.

The deletion flag EF is a piece of information included in the device deletion information DE stored in the storage device 28. The deletion flag EF is set to either a permission state or a prohibition state for each shareable key KS registered in the vehicle 20.

In a case in which the deletion flag EF is set to the permission state, when a digital key other than the shareable key KS in the phase-out period FO is authenticated by the vehicle 20 during the phase-out period FO, the vehicle 20 deletes the shareable key KS in the phase-out period FO.

In a case in which the deletion flag EF is set to a prohibition state, even when a digital key other than the shareable key KS in the phase-out period FO is authenticated by the vehicle 20 during the phase-out period FO, the vehicle 20 does not delete the shareable key KS in the phase-out period FO. The shareable key KS in the phase-out period FO is not deleted and is maintained in the phase-out period FO.

### Deletion Request RQ for First Shareable Key KSA

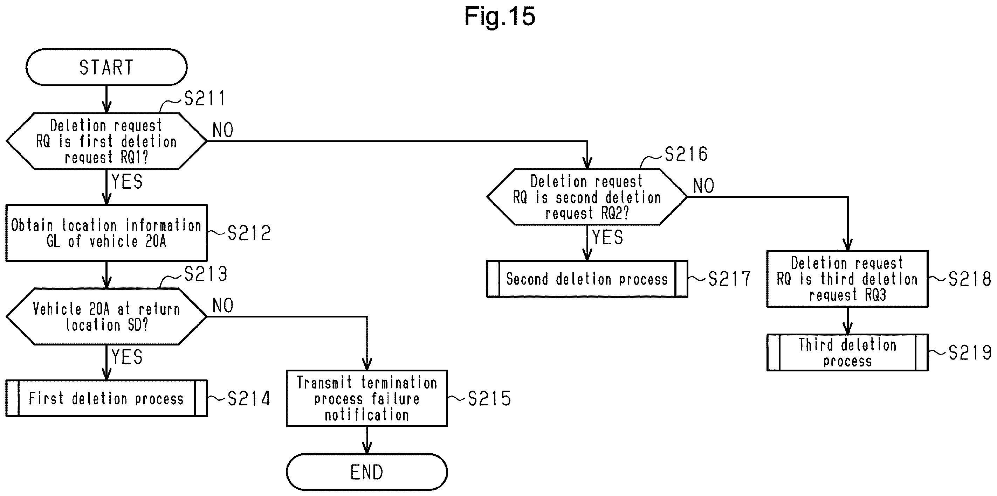

As shown in Fig. 15, upon receiving a deletion request RQ for a first shareable key KSA, a vehicle 20A executes a process of selecting a process to be executed based on the type of deletion request RQ. The process shown in Fig. 15 is a process executed by the execution device 27 of the vehicle 20A based on the deletion program PE.

The vehicle 20A is one of the vehicles 20. The vehicle 20A is a shared car used in, for example, a rental car service or a car-sharing service. A first owner key KOV, a first shareable key KSA, and a second shareable key KSB are registered in the vehicle 20A.

The first owner key KOV is an owner key KO registered in the virtual device 40V implemented on the server 80. The virtual device 40V is, for example, an owner device 40 owned by a business operator that provides a rental car service or a car-sharing service.

The first shareable key KSA is a shareable key KS registered in a first shareable device 51A belonging to a first user UA. The first shareable key KSA is a friend key KF. The second shareable key KSB is a shareable key KS registered in a second shareable key 52B belonging to a second user UB. The second shareable key KSB is a guest key KN. The validity period VP for use of the vehicle 20A is set for each of the first shareable key KSA and the second shareable key KSB.

In the following description, processes executed by the execution device 27 of the vehicle 20A are described as processes executed by the vehicle 20A. Upon receiving the deletion request RQ for the first shareable key KSA from the management server 70, the vehicle 20A starts a series of processes illustrated in Fig. 15.

### Type of Deletion Requests RQ

First, the deletion requests RQ, which are used in the series of processes illustrated in Fig. 15, will be described.

A deletion request RQ is a signal for requesting the vehicle 20A to delete the authentication information AT related to the first shareable key KSA. The deletion requests RQ are classified into multiple types based on the device 30 that has requested the deletion or the situation in which the deletion has been requested. The deletion requests RQ include three types: a first deletion request RQ1, a second deletion request RQ2, and a third deletion request RQ3.

The first deletion request RQ1 is a deletion request RQ generated based on a request from the first shareable key KSA itself. The second deletion request RQ2 is a deletion request RQ generated based on expiration of the validity period VP of the first shareable key KSA. The third deletion request RQ3 is a deletion request RQ generated based on a request from the first owner key KOV, which is a digital key other than the first shareable key KSA.

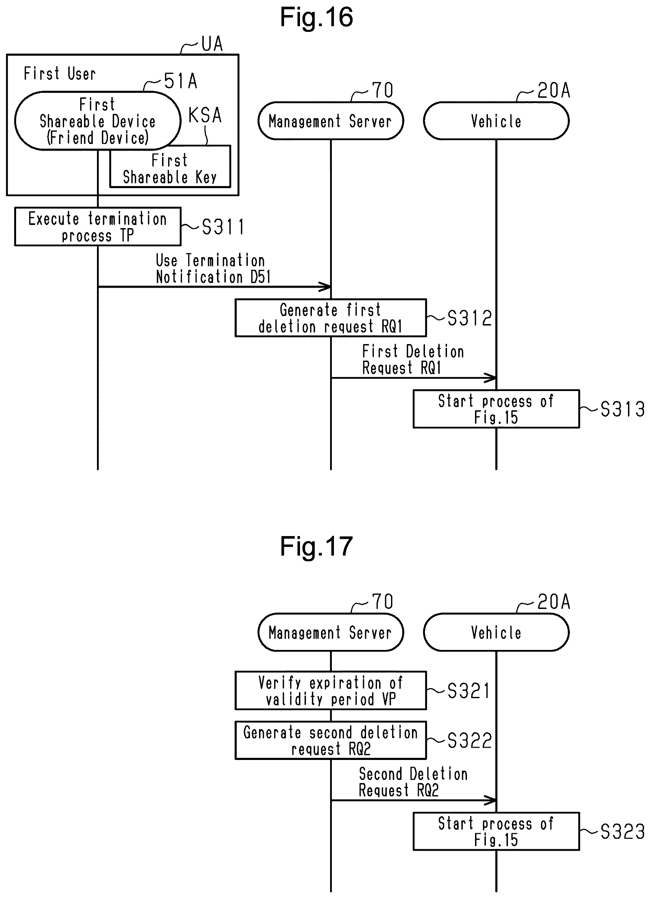

As shown in Fig. 16, the management system 10 executes a series of processes of transmitting the first deletion request RQ1 to the vehicle 20A.

As shown in Fig. 16, in step S311, the first shareable device 51A executes a termination process TP based on operation performed by the first user UA. The termination process TP permits the management server 70 to start the process of deleting the first shareable key KSA. In the termination process TP, the first shareable device 51A transmits a use termination notification D51, indicating that the use of the vehicle 20A is to be terminated, to the management server 70.

Upon receiving the use termination notification D51, the management server 70 executes the process of step S312. In step S312, the management server 70 generates the first deletion request RQ1 based on the use termination notification D51.

The first deletion request RQ1 includes information indicating that the first shareable key KSA itself is requesting deletion of the first shareable key KSA. Specifically, the first deletion request RQ1 includes the digital key identification information ST3 of the first shareable key KSA as information indicating the digital key that has made the deletion request. The first deletion request RQ1 includes the digital key identification information ST3 of the first shareable key KSA as information for indicating the digital key requesting deletion of the authentication information AT. After generating the first deletion request RQ1, the management server 70 transmits the first deletion request RQ1 to the vehicle 20A.

Upon receiving the first deletion request RQ1, the vehicle 20A starts the process shown in Fig. 15 in step S313.

As shown in Fig. 17, the management system 10 executes a series of processes of transmitting the second deletion request RQ2 to the vehicle 20A.

As shown in Fig. 17, in step S321, the management server 70 verifies that the validity period VP of the first shareable key KSA has expired. Specifically, the period management program PT causes the execution device 71 to acquire the validity end time information ATP4 of the first shareable key KSA from the database DB at prescribed time intervals and to check whether the validity period VP has expired. In step S321, when the management server 70 verifies that the validity period VP of the first shareable key KSA has expired, the management server 70 advances the process to step S322.

In step S322, the management server 70 generates the second deletion request RQ2. The second deletion request RQ2 includes information indicating that deletion of the first shareable key KSA is being requested based on expiration of the validity period VP of the first shareable key KSA. Specifically, the second deletion request RQ2 includes the digital key identification information ST3 of the first shareable key KSA as information for indicating the digital key requesting deletion of the authentication information AT. The second deletion request RQ2 includes the validity start time information ATP3 and validity end time information ATP4 of the first shareable key KSA as information for indicating that the validity period VP of the first shareable key KSA has expired. After generating the second deletion request RQ2, the management server 70 transmits the second deletion request RQ2 to the vehicle 20A.

Upon receiving the second deletion request RQ2, the vehicle 20A starts the process shown in Fig. 15 in step S323.

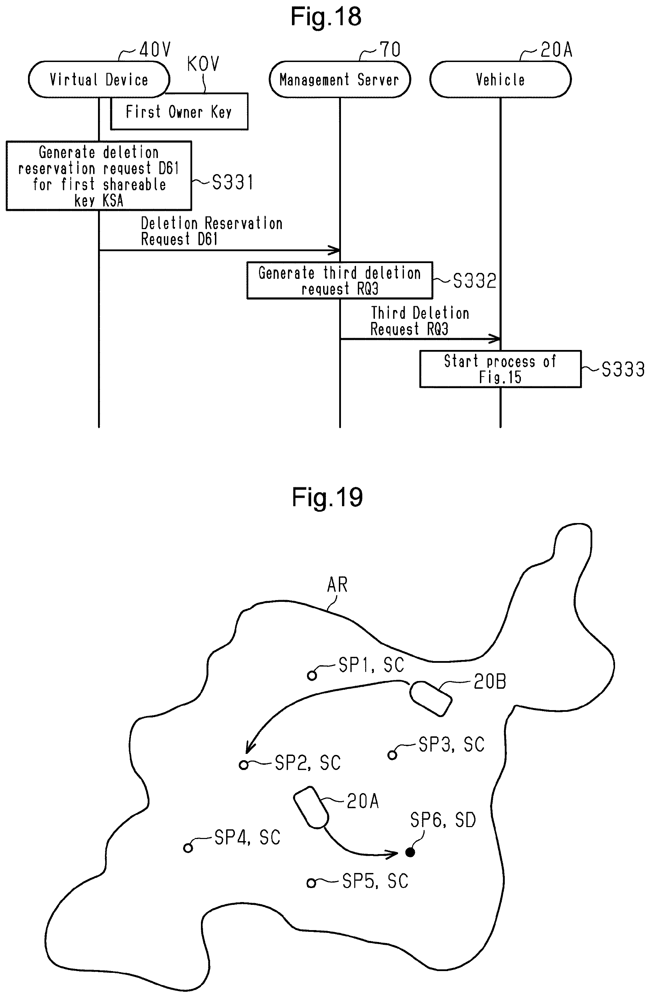

As shown in Fig. 18, the management system 10 executes a series of processes of transmitting the third deletion request RQ3 to the vehicle 20A.

As shown in Fig. 18, in step S331, the virtual device 40V generates a deletion reservation request D61. The deletion reservation request D61 requests the management server 70 to delete the first shareable key KSA. The deletion reservation request D61 includes information on a condition for deleting the first shareable key KSA. The information on the condition for executing deletion is, for example, the date and time when the first shareable key KSA is deleted. Subsequently, the virtual device 40V transmits the deletion reservation request D61 to the management server 70.

Upon receiving the deletion reservation request D61, the management server 70 executes the process of step S332. In step S332, the management server 70 generates the third deletion request RQ3 based on the deletion reservation request D61. The third deletion request RQ3 includes information indicating that the first owner key KOV requests deletion of the first shareable key KSA. Specifically, the third deletion request RQ3 includes the digital key identification information ST3 of the first owner key KOV as information indicating the digital key that has made the deletion request. The third deletion request RQ3 includes the digital key identification information ST3 of the first shareable key KSA as information for indicating the digital key requesting deletion of the authentication information AT. The third deletion request RQ3 includes information on a condition for deleting the first shareable key KSA. After generating the third deletion request RQ3, the management server 70 transmits the third deletion request RQ3 to the vehicle 20A.

Thereafter, upon receiving the third deletion request RQ3, the vehicle 20A starts the process shown in Fig. 15 in step S333.

### Selection of Deletion Process in the Vehicle 20A

Upon receiving the deletion request RQ, which is any one of the first deletion request RQ1, the second deletion request RQ2, and the third deletion request RQ3, the vehicle 20A starts the process illustrated in Fig. 15.

As shown in Fig. 15, in step S211, the vehicle 20A determines whether the received deletion request RQ is the first deletion request RQ1. In a case in which the deletion request RQ is the first deletion request RQ1 (step S211; YES), the vehicle 20A advances the process to step S212. In a case in which the deletion request RQ is not the first deletion request RQ1 (step S211; NO), the vehicle 20A advances the process to step S216.

In step S212, the vehicle 20A acquires the location information GL of the vehicle 20A by using the positioning device 29C. After acquiring the location information GL of the vehicle 20A, the vehicle 20A advances the process to step S213.

In step S213, the vehicle 20A determines whether the first deletion request RQ1 was received with the vehicle 20A in a stopped state at a return location SD. In step S213, when determining that the first deletion request RQ1 was received with the vehicle 20A in a stopped state at the return location SD (step S213; YES), the vehicle 20A advances the process to step S214. In step S213, when determining that the first deletion request RQ1 was not received with the vehicle 20A in a stopped state at the return location SD (step S213; NO), the vehicle 20A advances the process to step S215.

The return location SD is a location determined in advance as a point at which the use of the vehicle 20A is to be terminated. In a case in which the return location SD is set, the return location SD corresponds to a termination location SE, which is a prescribed point at which the use of the vehicle 20A is terminated.

Fig. 19 shows the positional relationship between the vehicle 20A and the return location SD. Fig. 19 shows a usage area AR. The usage area AR indicates a geographical region in which the use of the vehicle 20A is permitted. The usage area AR is, for example, a municipality in Japan. By way of example, when the usage area AR is T City in Japan, the user is permitted to use the vehicle 20A only within T City.

The return location SD of the vehicle 20A is a return spot SP6 indicated by a black circle in Fig. 19. The user of the vehicle 20A can freely use the vehicle 20A within the usage area AR. The user of the vehicle 20A arrives at the return spot SP6, which is the return location SD, before expiration of the validity period VP and terminates the use of the vehicle 20A.

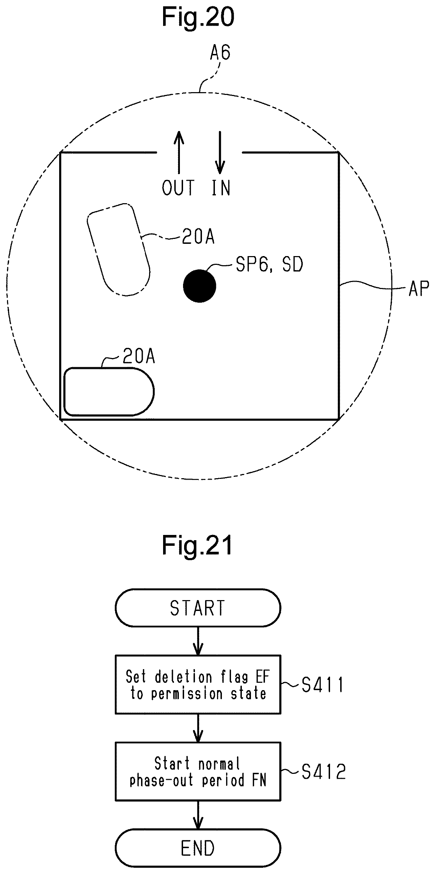

Fig. 20 is an enlarged schematic diagram of the area around the return spot SP6 shown in Fig. 19. As shown in Fig. 20, a return parking lot AP is provided around the return spot SP6. The return parking lot AP is a site for parking the vehicle 20A when terminating the use of the vehicle 20A. The return parking lot AP is, for example, a parking space of a rental car shop. The return parking lot AP is a parking space provided in a car station in a car-sharing service. The car station is, for example, an unmanned facility provided with multiple shared cars and equipment necessary for users to start or terminate the use of the shared cars.

As indicated by a circle of a long-dash double-short-dash line in Fig. 20, a return-permissible area A6 is defined around the return spot SP6. The return-permissible area A6 is virtually defined as any region within a prescribed range from the return spot SP6. As shown in Fig. 20, the return-permissible area A6 is, for example, a circular area having a radius of a prescribed distance that covers the entire area of the return parking lot AP in the return spot SP6.

The vehicle 20A indicated by a solid line in Fig. 20 is stopped at a corner of the return parking lot AP within the return-permissible area A6. Accordingly, the vehicle 20A determines that the vehicle 20A is stopped at the return spot SP6 when the vehicle 20A is located within the prescribed distance from the return spot SP6.

In step S213 of Fig. 15, the vehicle 20A determines whether the first deletion request RQ1 has been received with the vehicle 20A stopped at the return spot SP6, which is the return location SD, based on the location information GL of the vehicle 20A. When the vehicle 20A is located within the prescribed distance from the return spot SP6, the vehicle 20A determines that the first deletion request RQ1 has been received with the vehicle 20A stopped at the return location SD (step S213; YES). In step S213, when the vehicle 20A is not located within the prescribed distance from the return spot SP6, the vehicle 20A determines that the first deletion request RQ1 has not been received with the vehicle 20A stopped at the return location SD (step S213; NO).

Thereafter, in step S214, the vehicle 20A executes a first deletion process. The first deletion process is a process of deleting the first shareable key KSA executed by the vehicle 20A when the deletion request RQ is the first deletion request RQ1 and the first deletion request RQ1 has been received with the vehicle 20A stopped at the return location SD. Details of the first deletion process will be described below.

In step S215, the vehicle 20A transmits a termination process failure notification to the management server 70. The termination process failure notification includes information indicating that the termination process TP of the vehicle 20A has not been completed because it has been determined that the first deletion request RQ1 was not received with the vehicle 20A stopped at the return location SD. Upon receiving the termination process failure notification, the management server 70 forwards, based on the termination process failure notification, a reprocessing request to the first shareable device 51A. The reprocessing request is a notification requesting that a first user UA, to whom the first shareable device 51A belongs, perform an operation to execute the termination process TP again after verifying that the vehicle 20A is stopped at the return location SD.

In step S211, in a case in which it is determined that the deletion request RQ is not the first deletion request RQ1 (step S211; NO), the vehicle 20A executes the process of step S216. In step S216, the vehicle 20A determines whether the deletion request RQ is the second deletion request RQ2. In step S216, when it is determined that the deletion request RQ is the second deletion request RQ2 (step S216; YES), the vehicle 20A advances the process to step S217 In step S216, when it is determined that the deletion request RQ is not the second deletion request RQ2 (step S216; NO), the vehicle 20A advances the process step S218.

In step S217, the vehicle 20A executes a second deletion process. The second deletion process is executed by the vehicle 20A to delete the first shareable key KSA when the deletion request RQ is the second deletion request RQ2. Details of the second deletion process will be described below.

In step S218, the vehicle 20A verifies that the deletion request RQ is the third deletion request RQ3. Subsequently, the vehicle 20A advances the process to step S219.

In step S219, the vehicle 20A executes a third deletion process. The third deletion process is executed by the vehicle 20A to delete the first shareable key KSA when the deletion request RQ is the third deletion request RQ3. Details of the third deletion process will be described below.

When executing any one of the processes of step S214, step S215, step S217, and step S219, the vehicle 20A ends the series of processes.

### Deletion Process for the First Shareable Key KSA

In the following, each deletion process shown in Fig. 15, namely the first deletion process, the second deletion process, and the third deletion process, will be described in sequence. In the following description, the prescribed condition RC upon which the phase-out period FO expires is, as described above, that a digital key other than the shareable key KS to be deleted, that is, a digital key other than the first shareable key KSA, is authenticated by the vehicle 20A. In the following, a digital key other than the first shareable key KSA that is authenticated by the vehicle 20A will be referred to as a second shareable key KSB. The deletion flag EF is information indicating whether deletion of the first shareable key KSA in the phase-out period FO is permitted. As above, in the following description, processes executed by the execution device 27 are described as processes executed by the vehicle 20A.

### First Deletion Process

As shown in Fig. 21, the vehicle 20A executes the first deletion process. The first deletion process is started by the vehicle 20A when step S214 is executed in the process shown in Fig. 15.

First, in step S411, the vehicle 20A sets the deletion flag EF to the permission state.

Next, in step S412, the vehicle 20A starts the phase-out period FO of the first shareable key KSA. At this time, as a result of the process of step S411, the deletion flag EF of the first shareable key KSA has been set to the permission state. During the phase-out period FO started in step S412, when the second shareable key KSB is authenticated by the vehicle 20A, the vehicle 20A terminates the phase-out period FO of the first shareable key KSA and executes deletion of the first shareable key KSA. In the following, the phase-out period FO in which the first shareable key KSA is deleted when the second shareable key KSB is authenticated by the vehicle 20A will be referred to as a normal phase-out period FN.

After executing the process of step S412, the vehicle 20A ends the first deletion process.

When determining that the first deletion request RQ1 has been received with the vehicle 20A stopped at the return location SD, the vehicle 20A starts the first deletion process for the first shareable key KSA. The first deletion process starts the normal phase-out period FN, in which the first shareable key KSA is deleted when the second shareable key KSB, which is a digital key other than the first shareable key KSA, is authenticated for the vehicle 20A. The normal phase-out period FN started in step S412 is a second grace period.

### Second Deletion Process

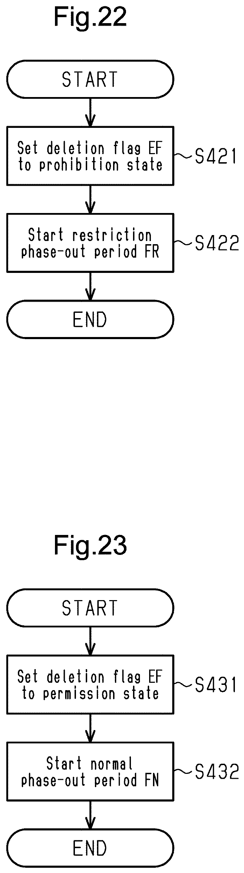

As shown in Fig. 22, the vehicle 20A executes the second deletion process. The second deletion process is started by the vehicle 20A when step S217 is executed in the process shown in Fig. 15.

First, in step S421, the vehicle 20A sets the deletion flag EF to the prohibition state.

Next, in step S422, the vehicle 20A starts the phase-out period FO of the first shareable key KSA. At this time, as a result of the process of step S421, the deletion flag EF of the first shareable key KSA has been set to the prohibition state. In the phase-out period FO started in step S422, even if the second shareable key KSB is authenticated by the vehicle 20A, the vehicle 20A does not delete the first shareable key KSA and continues the phase-out period FO. In the following, a certain type of phase-out period FO will be referred to as a restriction phase-out period FR. During the restriction phase-out period FR, the vehicle 20A does not delete the first shareable key KSA even if the second shareable key KSB is authenticated for the vehicle 20A. The start date and time of the restriction phase-out period FR is set to coincide with the expiration date and time of the validity period VP of the first shareable key KSA.

After executing the process of step S422, the vehicle 20A ends the second deletion process.

When the second deletion request RQ2 is received, the vehicle 20A sets the restriction phase-out period FR. The vehicle 20A starts the restriction phase-out period FR after receiving the second deletion request RQ2, that is, after the validity period VP of the first shareable key KSA expires. The restriction phase-out period FR is a first grace period during which deletion of the first shareable key KSA is deferred.

When the second deletion process is executed, the vehicle 20A does not receive the first deletion request RQ1. When determining that the first deletion request RQ1 has not been received with the vehicle 20A stopped at the return location SD, the vehicle 20A executes the second deletion process of starting the restriction phase-out period FR. When determining that the first deletion request RQ1 has not been received with the vehicle 20A stopped at the return location SD, the vehicle 20A does not delete the first shareable key KSA even if the digital key other than the first shareable key KSA is authenticated for the vehicle 20A.

### Third Deletion Process

As shown in Fig. 23, the vehicle 20A executes the third deletion process. The third deletion process is started by the vehicle 20A when step S219 is executed in the process shown in Fig. 15.

First, in step S431, the vehicle 20A sets the deletion flag EF to the permission state.

Next, in step S432, the vehicle 20A starts the phase-out period FO of the first shareable key KSA. At this time, as a result of the process of step S431, the deletion flag EF of the first shareable key KSA has been set to the permission state. During the phase-out period FO started in step S432, when the second shareable key KSB is authenticated by the vehicle 20A, the vehicle 20A terminates the phase-out period FO of the first shareable key KSA and executes deletion of the first shareable key KSA. The phase-out period FO started in step S432 is the normal phase-out period FN as in the first deletion process shown in Fig. 21.

After executing the process of step S432, the vehicle 20A ends the third deletion process.

The normal phase-out period FN started in step S432 is a third grace period, during which deletion of the first shareable key KSA is deferred until the second shareable key KSB is authenticated after the third deletion request RQ3 is received.

### Deletion of the First Shareable Key KSA

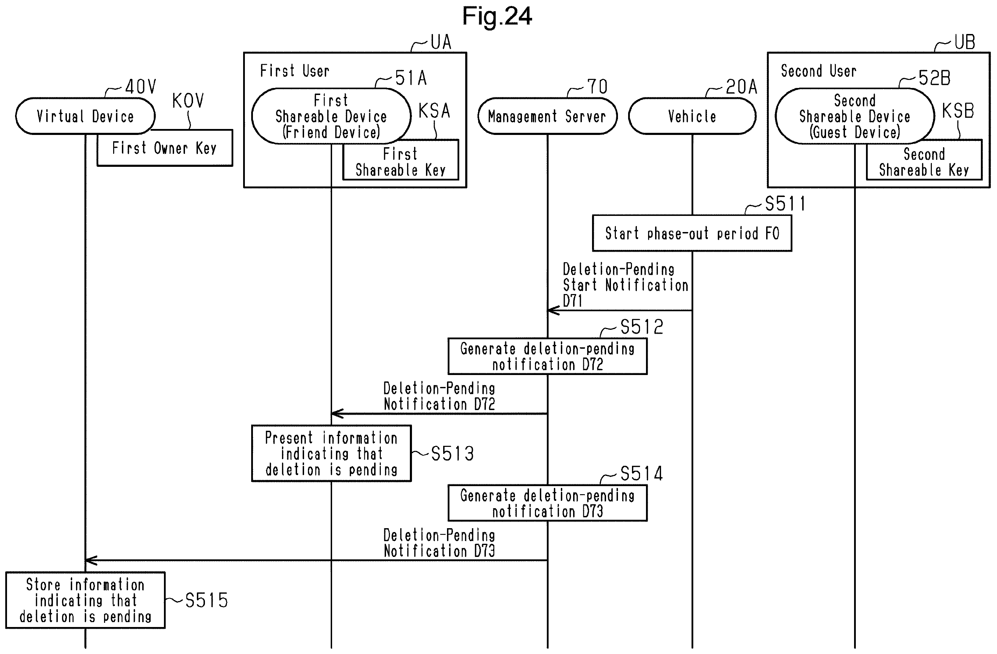

As shown in Figs. 24 to 26, the management system 10 executes a series of processes related to deletion of the first shareable key KSA. Also in Figs. 24 to 26, the first shareable key KSA is the shareable key KS to be deleted. Also in Figs. 24 to 26, the second shareable key KSB is a digital key that is authenticated for the vehicle 20A and other than the first shareable key KSA.

As shown in Fig. 24, first, in step S511, the vehicle 20A starts the phase-out period FO of the first shareable key KSA. The phase-out period FO includes both the normal phase-out period FN shown in Figs. 21 and 23 and the restriction phase-out period FR shown in Fig. 22. When the vehicle 20A starts any of the phase-out periods FO, the vehicle 20A transmits, to the management server 70, a deletion-pending start notification D71 indicating that the phase-out period FO of the first shareable key KSA has been started.

Upon receiving the deletion-pending start notification D71, the management server 70 executes the process of step S512. In step S512, the management server 70 generates a deletion-pending notification D72 indicating that the first shareable key KSA is in the phase-out period FO based on the deletion-pending start notification D71. Then, the management server 70 transmits the deletion-pending notification D72 to the first shareable device 51A.

Thereafter, when the first shareable device 51A receives the deletion-pending notification D72, the first shareable device 51A executes the process of step S513. In step S513, the first shareable device 51A causes the HMI 32 to present information indicating that the first shareable key KSA registered in the first shareable device 51A is in the phase-out period FO. At this time, the first shareable device 51A displays, on the HMI32, information indicating whether the phase-out period FO of the first shareable key KSA is the normal phase-out period FN or the restriction phase-out period FR. In other words, the first shareable device 51A displays, on the HMI 32, information indicating whether the first shareable key KSA is to be deleted when a digital key other than the first shareable key KSA is authenticated by the vehicle 20A.

After the process of step S512, the management server 70 executes the process of step S514. As in step S512, in step S514, the management server 70 generates a deletion-pending notification D73 indicating that the first shareable key KSA is in the phase-out period FO based on the deletion-pending start notification D71. The management server 70 transmits a deletion-pending notification D73 to the virtual device 40V.

When the virtual device 40V receives the deletion-pending notification D73, the virtual device 40V executes the process of step S515. In step S515, the virtual device 40V updates the shareable key list LS to store information indicating that the first shareable key KSA is in the phase-out period FO.

The shareable key list LS is list information stored in the storage device 37 of the virtual device 40V. The shareable key list LS includes information related to each shareable key KS registered based on each owner key KO registered in the virtual device 40V. The shareable key list LS includes, for example, information relating to the validity period VP and the phase-out period FO of each shareable key KS.

The virtual device 40V references the information included in the deletion-pending notification D73 and acquires information indicating whether the phase-out period FO of the first shareable key KSA is the normal phase-out period FN or the restriction phase-out period FR. The virtual device 40V stores information indicating whether the phase-out period FO of the first shareable key KSA is the normal phase-out period FN or the restriction phase-out period FR in the information on the first shareable key KSA of the shareable key list LS.

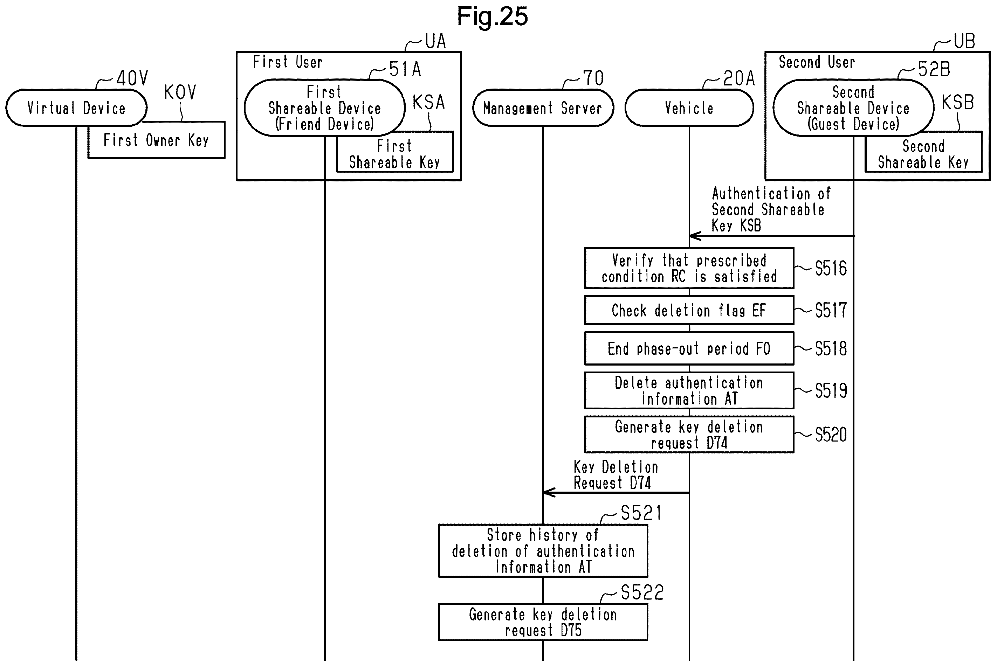

As shown in Fig. 25, when the second shareable key KSB is authenticated by the vehicle 20A, the vehicle 20A starts the process of step S516.

In step S516, the vehicle 20A verifies that the prescribed condition RC is satisfied. In other words, the vehicle 20A verifies that the second shareable key KSB, which is different from the first shareable key KSA, has been authenticated by the vehicle 20A. When verifying that the second shareable key KSB has been authenticated by the vehicle 20A, the vehicle 20A advances the process to step S517.

In step S517, the vehicle 20A checks the deletion flag EF for the first shareable key KSA by referencing the device deletion information DE. When verifying that the first shareable key KSA is in the normal phase-out period FN in which the deletion flag EF is set to the permission state, the vehicle 20A advances the process step S518. When verifying that the first shareable key KSA is in the restriction phase-out period FR, in which the deletion flag EF is set to a prohibition state, the vehicle 20A stops the process in step S517. Even if the vehicle 20A stops the process in step S517, the user can continue to use the vehicle 20A by means of the second shareable key KSB without any problem. Thereafter, when a digital key other than the first shareable key KSA is authenticated again by the vehicle 20A, the vehicle 20A starts the process of step S516 again.

In step S518, the vehicle 20A ends the phase-out period FO of the first shareable key KSA. This phase-out period FO is the normal phase-out period FN. When the phase-out period FO expires, the vehicle 20A advances the process to step S519.

In step S519, the vehicle 20A deletes the authentication information AT for authenticating the first shareable key KSA. That is, the vehicle 20A deletes the authentication package ATP of the first shareable key KSA.

In step S520, the vehicle 20A generates a key deletion request D74 for requesting deletion of the friend key information DKF of the first shareable key KSA. The key deletion request D74 includes information indicating that deletion of the authentication information AT related to the first shareable key KSA has been completed, in addition to information indicating that deletion of the friend key information DKF of the first shareable key KSA is requested. Thereafter, the vehicle 20A transmits a key deletion request D74 to the management server 70.

Upon receiving the key deletion request D74, the management server 70 starts the process of step S521. In step S521, the management server 70 stores a history of deletion of the authentication information AT for authenticating the first shareable key KSA in the vehicle 20A. Thereafter, the management server 70 advances the process to step S522.

In step S522, the management server 70 generates a key deletion request D75 requesting deletion of the friend key information DKF indicating the first shareable key KSA.

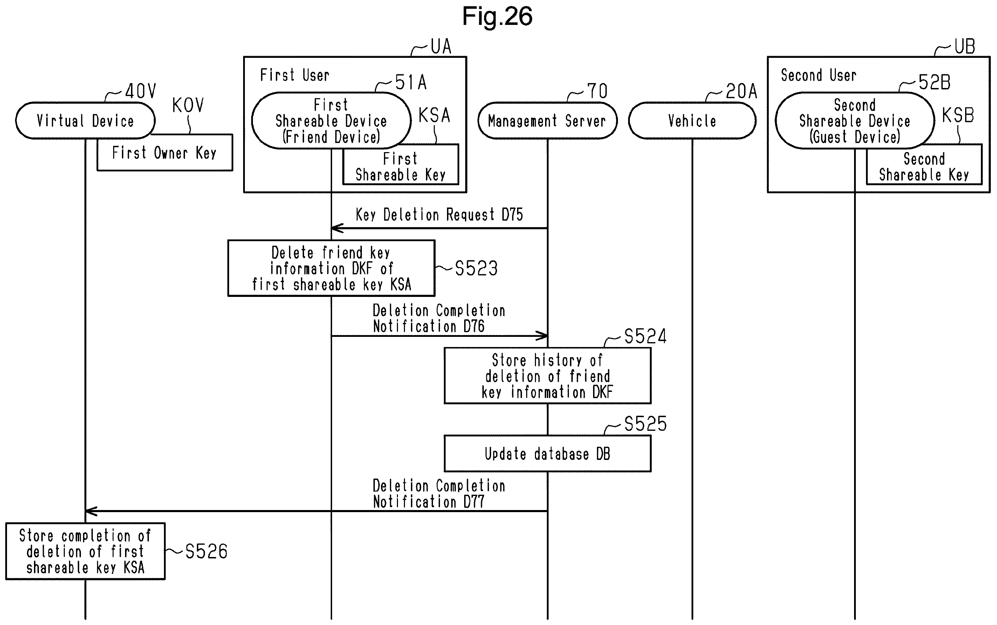

Then, as shown in Fig. 26, the management server 70 transmits the key deletion request D75 to the first shareable device 51A.

Thereafter, upon receiving the key deletion request D75, the first shareable device 51A executes the process of step S523. In step S523, the first shareable device 51A deletes the friend key information DKF of the first shareable key KSA in response to the key deletion request D75. The first shareable device 51A transmits, to the management server 70, a deletion completion notification D76 indicating that the deletion according to the key deletion request D75 has been completed.

Thereafter, upon receiving the deletion completion notification D76, the management server 70 executes the process of step S524. In step S524, the management server 70 stores a history of deletion of the friend key information DKF related to the first shareable key KSA in the first shareable device 51A. Thereafter, the management server 70 advances the process to step S525.

In step S525, the management server 70 updates the database DB. Specifically, the management server 70 deletes the information relating to the first shareable device 51A having the first shareable key KSA from the database DA of the vehicle 20A in the database DB. Thereafter, the management server 70 transmits, to the virtual devices 40V, a deletion completion notification D77 indicating that deletion of the first shareable key KSA based on the deletion request RQ has been completed.

Upon receiving the deletion completion notification D77, the virtual device 40V executes the process of step S526. In step S526, the virtual device 40V stores, in the storage device 37, information indicating that the deletion of the first shareable key KSA is completed. Specifically, the virtual device 40V updates the information relating to the first shareable key KSA in the shareable key list LS. In this manner, the management system 10 ends the series of processes for deleting the first shareable key KSA.

### Emergency Deletion Process EU for the First Shareable Key KSA

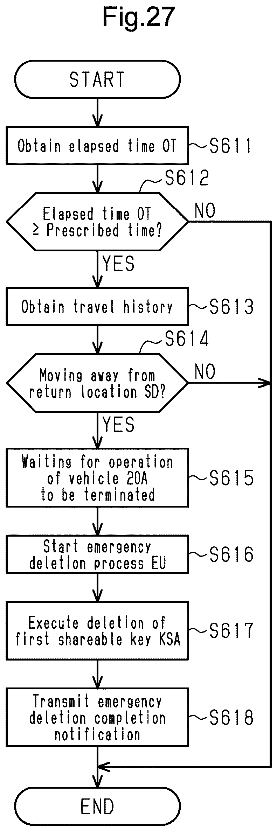

As shown in Fig. 27, the vehicle 20A executes a series of processes for executing an emergency deletion process EU on the first shareable key KSA. The process shown in Fig. 27 is executed by the vehicle 20A at prescribed time intervals during the restriction phase-out period FR based on the deletion program PE. As above, in the following description, processes executed by the execution device 27 are described as processes executed by the vehicle 20A.

In Fig. 27, the first shareable key KSA is in the restriction phase-out period FR. In other words, the first shareable key KSA is in a state after the second deletion process is executed due to expiration of the validity period VP.

First, in step S611, the vehicle 20A acquires an elapsed time OT for the first shareable key KSA. The elapsed time OT is an amount of time that has elapsed from the start of the restriction phase-out period FR Specifically, the elapsed time OT is an amount of time that has elapsed from a start date and time of the restriction phase-out period FR. After acquiring the elapsed time OT, the vehicle 20A advances the process to step S612.

In step S612, the vehicle 20A determines whether the elapsed time OT is greater than or equal to a prescribed time. When it is determined in step S612 that the elapsed time OT is greater than or equal to the prescribed time (step S612; YES), the vehicle 20A advances the process to step S613. When it is determined in step S612 that the elapsed time OT is not greater than or equal to the prescribed time (step S612; NO), the vehicle 20A temporarily ends the series of processes.

Next, in step S613, the vehicle 20A acquires a travel history of the vehicle 20A. The vehicle 20A acquires changes of the location of the vehicle 20A as a travel history based on the location information GL of the vehicle 20A at respective times included in the vehicle history information HC. The vehicle 20A advances the process to step S614.

In step S614, the vehicle 20A determines whether the location of the vehicle 20A is moving away from the return location SD based on the travel history.

In step S614, when the vehicle 20A determines that the location of the vehicle 20A is moving away from the return location SD (step S614; YES), the vehicle 20A advances the process to step S615. In step S614, when the vehicle 20A determines that the location of the vehicle 20A is not moving away from the return location SD (step S614; NO), the vehicle 20A temporarily ends the series of processes.

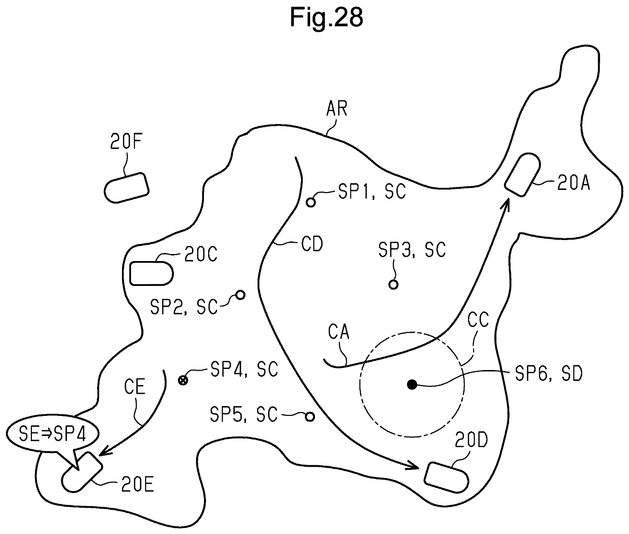

Fig. 28 shows the location of the vehicle 20A at the time t when the elapsed time OT becomes greater than or equal to the prescribed time. An arrow CA shown in Fig. 28 represents a travel path of the location of the vehicle 20A based on a history of the location information GL of the vehicle 20A. The arrow CA indicates a change in the location of the vehicle 20A from a start day and time of the restriction phase-out period FR to the time t. When, for example, the location of the vehicle 20A moves as indicated by the arrow CA in Fig. 28, the vehicle 20A determines that its location is moving away from the return location SD.

Next, in step S615, the vehicle 20A waits for operation of the vehicle 20A to be terminated. Termination of operation of the vehicle 20A refers, for example, to a user stopping the engine 29B of the vehicle 20A. Termination of operation of the vehicle 20A may also refer, for example, to a user stopping the engine 29B of the vehicle 20A and, from outside the vehicle 20A, operating the lock mechanism 29A to lock the vehicle 20A. When verifying that operation of the vehicle 20A has been terminated, the vehicle 20A advances the processing to step S616.

In step S616, the vehicle 20A starts the emergency deletion process EU. That is, the vehicle 20A starts the emergency deletion process EU in response to termination of operation of the vehicle 20A. Thereafter, the vehicle 20A advances the process to step S617.

In step S617, the vehicle 20A executes deletion of the first shareable key KSA in the emergency deletion process EU. Specifically, the vehicle 20A deletes the authentication information AT relating to the first shareable key KSA registered in the vehicle 20A. Upon completing deletion of the authentication information AT relating to the first shareable key KSA, the vehicle 20A advances the process to step S618.

In step S618, the vehicle 20A transmits an emergency deletion completion notification to the management server 70. The emergency deletion completion notification includes information indicating that the authentication information AT relating to the first shareable key KSA has been deleted by the emergency deletion process EU.

Upon executing the process of step S618, the vehicle 20A ends the series of processes relating to the emergency deletion process EU. As described above, when the elapsed time OT is greater than or equal to the prescribed time and the location of the vehicle 20A is moving away from the return location SD, the vehicle 20A subsequently starts the emergency deletion process EU, which deletes the first shareable key KSA, in response to a next termination of operation of the vehicle 20A.

### Operation of the Present Embodiment

If a grace period is provided during which deletion of the first shareable key KSA whose validity period VP has expired is deferred, the first user UA can continue to use the vehicle 20A by means of the first shareable key KSA even after expiration of the validity period VP. However, if, during the grace period, the second shareable key KSB, which is a digital key other than the first shareable key KSA, is authenticated by the vehicle 20A and deletion of the first shareable key KSA is executed as a result, the first user UA can no longer use the vehicle 20A by means of the first shareable key KSA.

The vehicle 20A determines, based on the location information GL, whether the first deletion request RQ1 based on the termination process TP has been performed with the vehicle 20A stopped at the return location SD, which is the termination location SE. When the execution device 27 determines that the first deletion request RQ1 has been made with the vehicle 20A stopped at the return location SD, the use of the vehicle 20A has terminated. In contrast, when the execution device 27 determines that the first deletion request RQ1 has not been made with the vehicle 20A stopped at the return location SD, the vehicle 20A is still being used. When the use of the vehicle 20A has not terminated, the vehicle 20A does not delete the first shareable key KSA that is in the restriction phase-out period FR even if the second shareable key KSB, which is a digital key different from the first shareable key KSA, is authenticated by the vehicle 20A. Even after expiration of the validity period VP, the vehicle 20A allows the first user UA to continue to use the vehicle 20A by means of the first shareable key KSA until the termination process TP is performed at the return location SD.

### Advantages of the Present Embodiment

(1) The first shareable key KSA is restricted from being deleted while the vehicle 20A is being used. Accordingly, it is possible to prevent the first user UA from becoming unable to use the vehicle 20A before reaching a destination.
(2) The execution device 27 is configured to determine that the vehicle 20A is stopped at the return location SD when the location information GL of the vehicle 20A indicates that the vehicle 20A is located within the prescribed distance from the return location SD.

If the vehicle 20A is located within the prescribed distance from the return location SD, the use of the vehicle 20A can be terminated even if the vehicle 20A is stopped at a location away from the return location SD.

(3) The first deletion process starts the normal phase-out period FN, in which the first shareable key KSA is deleted when the second shareable key KSB, which is a digital key other than the first shareable key KSA, is authenticated for the vehicle 20A.

Even after the first user UA has executed the termination process TP, the first user UA can continue using the vehicle 20A by means of the first shareable key KSA until the second shareable key KSB is authenticated by the vehicle 20A.

(4) The execution device 27 is configured to set the normal phase-out period FN when the deletion request RQ generated based on a request from the first owner key KOV, which is a digital key other than the first shareable key KSA, is received. The normal phase-out period FN is a period during which deletion of the first shareable key KSA is deferred until the second shareable key KSB, which is a digital key other than the first shareable key KSA, is authenticated for the vehicle 20A after the third deletion request RQ3 is received.

Even after the vehicle 20A receives the third deletion request RQ3 generated based on a request from another digital key, the vehicle 20A can be used by using the first shareable key KSA until the vehicle 20A authenticates the second shareable key KSB, which is a digital key other than the first shareable key KSA.

Even when the third deletion request RQ3, which is generated based on a request from another digital key, it is possible to prevent the vehicle 20A from immediately becoming unusable.

(5) The execution device 27 is configured to, when the elapsed time OT, which is an elapsed time from a start of the restriction phase-out period FR, becomes greater than or equal to the prescribed time, start the emergency deletion process EU that deletes the first shareable key KSA in response to a next termination of operation of the vehicle 20A.

In a case in which the elapsed time OT is greater than or equal to the prescribed time, the use of the vehicle 20A using the first shareable key KSA is continued even though the prescribed time or longer has elapsed after expiration of the validity period VP. When the elapsed time OT becomes greater than or equal to the prescribed time, the vehicle 20A deletes the first shareable key KSA in response to termination of operation of the vehicle 20A. In this manner, the vehicle 20A disables subsequent use of the vehicle 20A by means of the first shareable key KSA.

As described above, it is possible to restrict the use of the vehicle 20A using the first shareable key KSA of which the validity period VP has expired.

(6) The execution device 27 is configured to start the emergency deletion process EU in response to termination of the operation of the vehicle 20A when the elapsed time OT is greater than or equal to the prescribed time and the location of the vehicle 20A is moving away from the return location SD.

In a case in which the vehicle 20A is moving away from the return location SD even though the elapsed time OT is greater than or equal to the prescribed time, there is a high possibility that the first user UA does not intend to return the vehicle 20A.

When there is a high possibility that the first user UA does not intend to return the vehicle 20A, the vehicle 20A can restrict the use of the vehicle 20A by means of the first shareable key KSA.

### Modifications

The above-described embodiment may be modified as follows. The above-described embodiment and the following modifications can be combined as long as the combined modifications remain technically consistent with each other.

In the above-described embodiment, the termination location SE is the return location SD, which is determined in advance as a point at which the use of the vehicle 20A is to be terminated. The termination location SE may be configured such that the user of the vehicle 20 can select one point from multiple candidate points.

As shown in Fig. 19, five return-permissible locations SC, which are a return spot SP1, a return spot SP2, a return spot SP3, a return spot SP4, and a return spot SP5 are provided in the usage area AR. The return-permissible locations SC are candidate locations at which the user can terminate the use of the vehicle 20. The vehicle 20B shown in Fig. 19 is the vehicle 20 for which the termination location SE is not determined in advance. The user of the vehicle 20B can select any one of the five return-permissible locations SC as the termination location SE. For example, as indicated by an arrow in Fig. 19, the user of the vehicle 20B can select the return spot SP2 as the termination location SE.

When there are multiple return-permissible locations SC, at which the use of the vehicles 20B can be terminated, the termination location SE is one of the return-permissible locations SC. Even when there are multiple candidates for the termination location SE, the vehicle 20A will achieve advantage (1). The vehicle 20B corresponds, for example, to a rental car or car-sharing vehicle that permits one-way use and drop-off at a different location.

When the vehicle 20A is located within the prescribed distance from the return location SD, the vehicle 20A determines that the vehicle 20A is in a stopped state at the return location SD. The execution device 27 of the vehicle 20A may be configured to determine that the vehicle 20A is stopped at the return location SD when the vehicle 20A has been stopped at the return location SD for a prescribed time or longer.

For example, the vehicle 20A of a modification may determine that the vehicle 20A is stopped at the return location SD when the vehicle 20A is located within the prescribed distance from the return location SD and the vehicle 20A is stopped at the return location SD for the prescribed time or longer.

The vehicle 20A indicated by a long-dash short-dash line in Fig. 20 is temporarily stopped in the return parking lot AP for less than the prescribed time. In such a case, the vehicle 20A of the modification determines that the vehicle 20A is not in a stopped state. For example, when the vehicle 20A of the modification is stopped at a location indicated by a solid line in Fig. 20 for the prescribed time or longer, the vehicle 20A determines that the vehicle 20A is in a stopped state.

The vehicle 20A of the modification is capable of more accurately determining that the first user UA is about to terminate the use of the vehicle 20A.

In Fig. 27, the condition for a vehicle to start the emergency deletion process EU is not limited to the condition described above. The vehicle may be configured to start the emergency deletion process EU in response to termination of operation of the vehicle when the elapsed time OT is greater than or equal to the prescribed time and the vehicle is located at a distance from the return location SD that is longer than or equal to the prescribed distance. Fig. 28 illustrates four vehicles 20, which are a vehicle 20C, a vehicle 20D, a vehicle 20E, and a vehicle 20F that start the emergency deletion process EU based on a condition different from that of the vehicle 20A of the above-described embodiment. Fig. 28 shows the positions of the respective vehicles 20 at the time t, when the elapsed time OT for the first shareable key KSA becomes greater than or equal to the prescribed time.

The vehicle of this modification is, for example, the vehicle 20C shown in Fig. 28. The termination location SE of the vehicle 20C is the return spot SP6, which is the return location SD. A circle CC indicated by a long-dash short-dash line in Fig. 28 indicates a location away from the return spot SP6 by the prescribed distance. The vehicle 20C is located outside the circle CC. That is, the vehicle 20C is located at distance from the return location SD that is longer than or equal to the prescribed distance. When such a condition is met, the vehicle 20C starts the emergency deletion process EU.

In a case in which the vehicle 20C is located at a distance from the return location SD that is longer than or equal to the prescribed distance even though the elapsed time OT is greater than or equal to the prescribed time, there is a high possibility that the first user UA does not intend to return the vehicle 20C. When there is a high possibility that the first user UA does not intend to return the vehicle 20C, the vehicle 20C can restrict the use of the vehicle 20C by means of the first shareable key KSA.

The vehicle may be configured to start the emergency deletion process EU in response to termination of operation of the vehicle when the elapsed time OT is greater than or equal to the prescribed time and the vehicle passes through multiple return-permissible locations SC.

The vehicle of this modification is, for example, the vehicle 20D shown in Fig. 28. The termination location SE of the vehicle 20D is one of five return-permissible locations SC. An arrow CD indicates a travel path of the vehicle 20D from the start date and time of the restriction phase-out period FR to the time t. As indicated by the arrow CD in Fig. 28, the vehicle 20D passes through three return-permissible locations SC, which are a return spot SP1, a return spot SP2, and a return spot SP5. When such a condition is met, the vehicle 20D starts the emergency deletion process EU.

In a case in which the vehicle 20D has passed through multiple return-permissible locations SC even though the elapsed time OT is greater than or equal to the prescribed time, there is a high possibility that the first user UA does not intend to return the vehicle 20D. When there is a high possibility that the first user UA does not intend to return the vehicle 20D, the vehicle 20D can restrict the use of the vehicle 20D by means of the first shareable key KSA.

The vehicle may be configured to start the emergency deletion process EU in response to termination of operation of the vehicle when the vehicle is moving away from the termination location SE in a case in which the elapsed time OT is greater than or equal to the prescribed time and any one of the return-permissible locations SC is designated as the termination location SE. The vehicle designates any one of the return-permissible locations SC as the termination location SE after the start of the restriction phase-out period FR.

The vehicle of this modification is, for example, the vehicle 20E shown in Fig. 28. The termination location SE of the vehicle 20E is the return spot SP4. The return spot SP4 is designated as the termination location SE from among the five return-permissible locations SC by the vehicle 20E after the start of the restriction phase-out period FR. An arrow CE indicates a travel path of the vehicle 20E from the start date and time of the restriction phase-out period FR to the time t. The vehicle 20E is moving away from the return spot SP4 designated as the termination location SE. When such a condition is met, the vehicle 20E starts the emergency deletion process EU.

In a case in which the vehicle 20E is moving away from the designated return-permissible location SC even though the elapsed time OT is greater than or equal to the prescribed time, there is a high possibility that the first user UA does not intend to return the vehicle 20E. When there is a high possibility that the first user UA does not intend to return the vehicle 20E, the vehicle 20E can restrict the use of the vehicle 20E by means of the first shareable key KSA.

The vehicle may be configured to execute the emergency deletion process EU in response to termination of operation of the vehicle when the elapsed time OT is greater than or equal to the prescribed time and the vehicle is out of the usage area AR, where the use of the vehicle is permitted.

The vehicle of this modification is, for example, the vehicle 20F shown in Fig. 28. As shown in Fig. 28, the vehicle 20F is located outside the usage area AR. When such a condition is met, the vehicle 20F starts the emergency deletion process EU.

In a case in which the vehicle 20F is outside the usage area AR, where the use of the vehicle 20F is permitted, there is a high possibility that the first user UA does not intend to return the vehicle 20F. When there is a high possibility that the first user UA does not intend to return the vehicle 20F, the vehicle 20F can restrict the use of the vehicle 20F by means of the first shareable key KSA.

The vehicle 20A may be configured to start the emergency deletion process EU in response to termination of operation of the vehicle when the elapsed time OT is greater than or equal to the prescribed time.

In the above-described embodiment, the first owner key KOV is registered in the virtual device 40V. The first owner key KOV may be an owner key KO registered in the portable device 40M. In other words, the first shareable key KSA may be a shareable key KS registered based on the owner key KO registered in the portable device 40M.

The first shareable key KSA does not necessarily need to be a friend key KF. The first shareable key KSA may be a guest key KN registered based on the friend key KF.

The second shareable key KSB does not necessarily need to be a guest key KN. The second shareable key KSB may be a friend key KF. The digital key other than the first shareable key KSA to be authenticated by the vehicle 20A may be the first owner key KOV.

In the above-described embodiment, the first deletion process is a process of starting the normal phase-out period FN. The first deletion process may be a process of deleting the first shareable key KSA without starting the normal phase-out period FN. In this case, when the first deletion process is started by executing step S214 shown in Fig. 15, the vehicle 20A immediately deletes the authentication information AT related to the first shareable key KSA.

The vehicle 20A may start the restriction phase-out period FR in the third deletion process as in the second deletion process. Specifically, after setting the deletion flag EF to a prohibition state in step S431 of Fig. 23, the vehicle 20A may start the restriction phase-out period FR in step S432 of Fig. 23. In this case, even during the phase-out period FO based on the third deletion request RQ3, the vehicle 20A does not delete the first shareable key KSA until the use of the vehicle 20A ends.

Even when the deletion request RQ is the third deletion request RQ3, the vehicle 20A of the modification will achieve advantage (1).

The usage area AR is not limited to a municipality in Japan. The usage area AR may be set on a prefectural basis. The usage area AR may be set on a national basis. The usage area AR may also be set as a given geographic region composed of multiple countries.

The vehicle management device 26 is not limited to the digital key ECU. The vehicle management device 26 may be, for example, a central ECU that integrally manages multiple ECUs included in the vehicle 20.

In the above-described embodiment, the vehicle management device 26 is provided with the execution device 27, which is processing circuitry including one or more processors that run computer programs (software) to execute various processes. However, the vehicle management device 26 may be provided with processing circuitry including one or more dedicated hardware circuits, such as application-specific integrated circuits (ASICs) that execute at least some of the processes. Alternatively, the vehicle management device 26 may be provided with processing circuitry including a combination of one or more processors and one or more dedicated hardware circuits. Each processor includes a CPU and memory such as RAM and ROM. The memory stores program codes or commands configured to cause the CPU to execute processes. The memory, namely, a computer-readable medium, includes any available medium that is accessible by a general-purpose or special-purpose computer. The same applies to the devices 30 and the management server 70.

The devices 30 and the portable devices 40M, which are portable information terminals, are not limited to smartphones. The devices 30 and the portable devices 40M, which are portable information terminals, may be smartwatches.

The virtual device 40V may be included in a specified server such as the server 80. For example, the virtual device 40V may be included in the management server 70. Similarly, the friend device 51 may be included in a specified server.

In the above-described embodiment, the digital keys are arranged in a hierarchy consisting of, in descending order, the owner key KO, the friend key KF, and the guest key KN, such that digital keys at higher hierarchical levels are assigned greater authority. However, the digital keys do not necessarily need to be configured such that higher hierarchical levels correspond to greater authority. For example, equal authority may be assigned to the three hierarchical levels: the owner key KO, the friend key KF, and the guest key KN.

A separate device server 60 does not necessarily need to be provided for each type of device 30. It is sufficient that the multiple devices 30 and the management server 70 wirelessly communicate with each other. The device server 60 may be omitted from the management system 10. In the management system 10, it is sufficient that the multiple devices 30 and the management server 70 communicate directly via wireless communication.

The management server 70 may include multiple servers. For example, the management server may include a server that stores the database DB, a server that executes the server program PS, and a server that executes the period management program PT. In addition, for example, the management server 70 may include a server that communicates with the vehicles 20 and a server that communicates with the device server 60, and these servers may communicate with each other.

The management server 70 does not necessarily need to store the database DB. It is sufficient that the management server 70 manage at least a combination of the key information DK of the device 30 and the authentication information AT of the vehicle management device 26 for one digital key in the management system 10.

The authentication information AT is not limited to the example of the above-described embodiment as long as it is information for authenticating digital keys when digital keys are used. For example, the authentication information AT may be a common key shared by the vehicle management device 26 and the device 30. Further, for example, the authentication information AT may be a shared secret key.

The configuration of the information included in the key information DK is not limited to the example of the above-described embodiment. For example, the owner key information DKO does not necessarily need to include the slot identification information ST4. In another example, the key information DK may include information indicating the type of digital key. The information indicating the type of digital key includes, for example, information indicating one of the owner key KO, the friend key KF, and the guest key KN.

The management system 10 may include information indicating the types of the devices 30 in the database DB. The types of devices 30 are, for example, information indicating any one of a smartphone, a smartwatch, a server, and the like.

The structure of the data DA in the database DB is not limited to the example of the above-described embodiment. The database DB may be modified as long as it includes information necessary for the management server 70 to perform management in the management system 10.

In the database DB, the authority does not necessarily need to be uniformly determined in accordance with the type of digital key, and may be set for each digital key. In the database DB, the authority of the digital key does not necessarily need to be defined.

The shareable device 50 has a function of receiving the shareable key KS as in the above-described embodiment. A device 30 that is capable of receiving a digital key, such as a shareable device 50, may be referred to as a receiver device.

The digital key-related aspects in the above-described embodiment need not conform to the CCC standard.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuitry are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A vehicle (20) configured such that multiple digital keys can be registered therein, the digital keys including only one owner key (KO) registered in the vehicle (20) and one or more shareable keys (KS) that can be registered in the vehicle (20), the vehicle (20) comprising:
an execution device (27);
a storage device (28) configured to store information relating to the digital keys registered in the vehicle (20); and
a communication device (21) configured to communicate with a management server (70) configured to manage registration and deletion of the digital keys and with devices (30) configured to store information relating to the digital keys, wherein
the one or more shareable keys (KS) are configured such that a validity period (VP) of use of the vehicle (20) can be set for each shareable key (KS), and
the execution device (27) is configured to
set a first grace period (FR) during which deletion of a registered shareable key (KS) that is registered in the vehicle (20) and for which the validity period (VP) is set is deferred when a deletion request is made for the registered shareable key (KS) based on expiration of the validity period (VP) of the registered shareable key (KS),
determine, based on location information of the vehicle (20), whether a termination process (TP) of permitting a start of a deletion process for the registered shareable key (KS) has been executed with the vehicle (20) in a stopped state at a termination location (SE), the termination location (SE) being a prescribed location at which use of the vehicle (20) is to be terminated,
start the deletion process for the registered shareable key (KS) when determining that the termination process (TP) has been executed with the vehicle (20) in a stopped state at the termination location (SE), and
when determining that the termination process (TP) has not been executed with the vehicle (20) in a stopped state at the termination location (SE), not delete the registered shareable key (KS) for which deletion is deferred even if a digital key other than the registered shareable key (KS) is authenticated for the vehicle (20).

2. The vehicle (20) according to claim 1, wherein the termination location (SE) is a return location (SD) that is determined in advance as a location at which use of the vehicle (20) is to be terminated.

3. The vehicle (20) according to claim 1 or 2, wherein the termination location (SE) is any one of multiple return-permissible locations (SC) that are determined in advance as locations at which use of the vehicle (20) is permitted to be terminated.

4. The vehicle (20) according to any one of claims 1 to 3, wherein the execution device (27) is configured to determine that the vehicle (20) is in a stopped state at the termination location (SE) when the vehicle (20) is located within a prescribed distance from the termination location (SE).

5. The vehicle (20) according to any one of claims 1 to 4, wherein the execution device (27) is configured to determine that the vehicle (20) is in a stopped state at the termination location (SE) when the vehicle (20) has been in a stopped state at the termination location (SE) for a prescribed time or longer.

6. The vehicle (20) according to any one of claims 1 to 5, wherein the deletion process is a process of starting a second grace period (FN) in which the registered shareable key (KS) is deleted when the digital key other than the registered shareable key (KS) is authenticated for the vehicle (20).

7. The vehicle (20) according to any one of claims 1 to 6, wherein the execution device (27) is configured to, when the deletion request is made based on a request from the digital key other than the registered shareable key (KS), set a third grace period (FN) during which deletion of the registered shareable key (KS) is deferred from when the deletion request is made until the digital key other than the registered shareable key (KS) is authenticated for the vehicle (20).

8. The vehicle (20) according to any one of claims 1 to 7, wherein the execution device (27) is configured to, when a deletion start condition is satisfied, start an emergency deletion process (EU) of deleting the registered shareable key (KS) upon a subsequent termination of operation of the vehicle (20), the deletion start condition including a condition in which an elapsed time (OT), which is an amount of time elapsed from a start of the first grace period (FR), becomes greater than or equal to a prescribed time.

9. The vehicle (20) according to claim 8, wherein the execution device (27) is configured to start the emergency deletion process (EU) when the elapsed time (OT) is greater than or equal to the prescribed time and the vehicle (20) is located at a distance from the termination location (SE) that is longer than or equal to a prescribed distance.

10. The vehicle (20) according to claim 8 or 9, wherein the execution device (27) is configured to start the emergency deletion process (EU) when the elapsed time (OT) is greater than or equal to the prescribed time and the vehicle (20) is moving away from the termination location (SE).

11. The vehicle (20) according to any one of claims 8 to 10, wherein the execution device is configured to start the emergency deletion process (EU) when the elapsed time (OT) is greater than or equal to the prescribed time and the vehicle (20) passes through multiple return-permissible locations (SC) at which use of the vehicle (20) is permitted to be terminated.

12. The vehicle (20) according to any one of claims 8 to 11, wherein
the termination location (SE) is designated from among multiple return-permissible locations (SC) at which use of the vehicle (20) is permitted to be terminated, and
the execution device (27) is configured to start the emergency deletion process (EU) when the elapsed time (OT) is greater than or equal to the prescribed time and the vehicle (20) is moving away from the termination location (SE) after the first grace period (FR) is started.

13. The vehicle (20) according to any one of claims 8 to 12, wherein the execution device (27) is configured to execute the emergency deletion process (EU) when the elapsed time (OT) is greater than or equal to the prescribed time and the vehicle (20) is out of a usage area (AR) where use of the vehicle (20) is permitted.
